(19) Europäisches Patentamt
European Patent Office
Office européen des brevets

(11) EP 2 431 440 A1

(12) # EUROPEAN PATENT APPLICATION
published in accordance with Art. 153(4) EPC

(43) Date of publication:
**21.03.2012 Bulletin 2012/12**

(21) Application number: **10774978.0**

(22) Date of filing: **13.05.2010**

(51) Int Cl.:
***C09J 133/06*** *(2006.01)* ***C09J 7/00*** *(2006.01)*
***C09J 7/02*** *(2006.01)* ***C09J 11/00*** *(2006.01)*
***C09J 133/26*** *(2006.01)*

(86) International application number:
**PCT/JP2010/058136**

(87) International publication number:
**WO 2010/131721 (18.11.2010 Gazette 2010/46)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.05.2009 JP 2009117364**

(71) Applicant: **Nitto Denko Corporation**
**Ibaraki-shi**
**Osaka 567-8680 (JP)**

(72) Inventors:
- **OKAMOTO, Masayuki**
  **Osaka (JP)**
- **NIWA, Masahito**
  **Osaka (JP)**
- **HIGUCHI, Naoaki**
  **Osaka (JP)**

(74) Representative: **Grünecker, Kinkeldey, Stockmair & Schwanhäusser**
**Anwaltssozietät**
**Leopoldstrasse 4**
**80802 München (DE)**

(54) **HEAT-RELEASABLE PRESSURE-SENSITIVE ADHESIVE TAPE OR SHEET**

(57) The present invention provides a pressure-sensitive adhesive tape or sheet exhibiting good adhesiveness to a variety of adherends and further having both characteristics of repelling resistance and easy peelability. The heat-releasable pressure-sensitive adhesive tape or sheet according to the present invention has a heat-releasable pressure-sensitive adhesive layer containing: as an essential component, an acrylic copolymer formed of a monomer mixture comprising the following monomer (m1) and monomer (m2), with a content of the monomer (m1) being from 40 to 97.5 % by weight and a content of the monomer (m2) being from 0.5 to 20 % by weight, relative to the whole of monomer components; and a thermal foaming agent:
(m1) an alkyl (meth)acrylate monomer having an alkyl group with a carbon number of from 1 to 12, represented by the following formula (1):

[Chem. 1] $CH_2=C(R^1)COOR^2$ (1)

(in the formula (1), $R^1$ represents a hydrogen atom or a methyl group, and $R^2$ represents an alkyl group with a carbon number of from 1 to 12); and
(m2) an N-hydroxyalkyl (meth)acrylamide monomer having a hydroxyalkyl group with a carbon number of from 1 to 4, represented by the following formula (2):

[Chem. 2] $CH_2=C(R^3)CONHR^4$ (2)

(in the formula (2), $R^3$ represents a hydrogen atom or a methyl group, and $R^4$ represents a hydroxyalkyl group with a carbon number of from 1 to 4).

EP 2 431 440 A1

## Description

### TECHNICAL FIELD

The present invention relates to a heat-releasable pressure-sensitive adhesive tape or sheet having good balance in various characteristics such as adhesiveness to an adherend, repelling resistance and easy peelability.

### BACKGROUND ART

In manufacturing and processing processes of ceramic sheets, electronic parts or the like, there has hitherto been performed temporary fixing of various materials or the like, surface protection of a metal plate or the like, or the like. It is required that a pressure-sensitive adhesive member to be used for such an application can be easily peeled off and removed from an adherend after its use purpose has completed, and a pressure-sensitive adhesive sheet meeting such a requirement is desired. Also, in recent years, a demand regarding process rework for the purpose of enhancing a yield is increasing, and a pressure-sensitive adhesive sheet capable of exhibiting preferred peeling and removal properties or peelability at the time of rework is demanded. Furthermore, in the field of a pressure-sensitive adhesive sheet of strong adhesiveness to be used for housing equipment facilities or the like, from the viewpoints of generation of necessity of rework during an installation operation, necessity of repair or mending or the like during the use, and recycling after completed the use purpose of long-term adhesion, a pressure-sensitive adhesive sheet which can be easily peeled off from an adherend, or a pressure-sensitive adhesive sheet which can be easily disassembled together with a member is also demanded. In the light of the above, in the above-described applications, it is eagerly demanded to provide a pressure-sensitive adhesive sheet having both high adhesion reliability in conformity with a variety of use purposes and easiness of peeling after the use, and further having a variety of characteristics.

Under the circumstances where such requirements are presented, there has hitherto been disclosed a pressure-sensitive adhesive sheet which can be peeled off by a heat treatment, in manufacturing and processing of a manufacturing process of ceramic sheets or electronic parts (see Patent Document 1). But, in this pressure-sensitive adhesive sheet, in view of the fact that a range of its elastic modulus appropriate in order to reveal heat peelability is limited, or the like, there have been some cases where it is difficult to balance an appropriate adhesive force in conformity with each application (for example, a desired adhesive force controlled per application) and easy peelability. Furthermore, there was also the case where it is difficult to obtain a pressure-sensitive adhesive sheet also achieving such a characteristic (repelling resistance) that peeling does not occur when a certain stress is applied to a member over a long period of time, and as a result, a certain load is allied to the pressure-sensitive adhesive sheet, in relation to adhesive force or easy peelability.

Meanwhile, there is disclosed a heat-releasable pressure-sensitive adhesive sheet using a pressure-sensitive adhesive containing a considerable proportion of a structural unit derived from a carboxyl group-containing monomer represented by, for example, acrylic acid in a polymer backbone (see Patent Document 2). In this heat-releasable pressure-sensitive adhesive sheet, although it is easy to obtain a pressure-sensitive adhesive sheet revealing high adhesion reliability, namely adhesive force and repelling resistance, there may be the case where an adhesive force significantly increases with a lapse of time, thereby causing a problem from the standpoint of easy peelability. In particular, in the case of being used for a metal based adherend, or other case, there may have been the case where even when a heat treatment is performed, sufficient easy peelability cannot be revealed. For this reason, there was also involved such a problem that the adherend to be used is limited.

In the light of the above, there is desired a pressure-sensitive adhesive sheet exhibiting good adhesiveness to a variety of adherends and further having both characteristics of repelling resistance and easy peelability; or a heat-releasable pressure-sensitive adhesive sheet having adhesion reliability in conformity with an application and easy peelability after a heat treatment and being applied to any adherend.

### PRIOR ART DOCUMENTS

### PATENT DOCUMENTS

Patent Document 1: JP-A-5-43851

Patent Document 2: JP-A-6-306337

SUMMARY OF THE INVENTION

PROBLEM TO BE SOLVED BY THE INVENTION

In consequence, an object of the present invention is to provide a pressure-sensitive adhesive tape or sheet exhibiting good adhesiveness to a variety of adherends and further having both characteristics of repelling resistance and easy peelability, and in particular, a heat-releasable pressure-sensitive adhesive tape or sheet which has good adhesion reliability to a variety of adherends and which, when peeled off and disassembled or removed from an adherend at the time of completing the use purpose or at the time of recycling or the like, can be easily peeled off and disassembled or removed.

MEANS FOR SOLVING THE PROBLEM

In order to solve the foregoing problem, the present inventors made extensive and intensive investigations. As a result, it has been found that a pressure-sensitive adhesive tape or sheet having a heat-releasable pressure-sensitive adhesive layer, which has a thermal foaming agent blended therein and formed of a monomer mixture having a specified composition, on at least one surface of a pressure-sensitive adhesive, exhibits good adhesiveness to a variety of adherends, further has both characteristics of repelling resistance and easy peelability, and has good adhesion reliability to a variety of adherends, and when peeled off and disassembled or removed from an adherend at the time of completing the use purpose or at the time of recycling or the like, it can be easily peeled off and disassembled or removed, leading to accomplishment of the invention.

That is, the present invention relates to the following [1] to [13]

[1] A heat-releasable pressure-sensitive adhesive tape or sheet having a heat-releasable pressure-sensitive adhesive layer containing: as an essential component, an acrylic copolymer formed of a monomer mixture comprising the following monomer (m1) and monomer (m2), with a content of the monomer (m1) being from 40 to 97.5 % by weight and a content of the monomer (m2) being from 0.5 to 20 % by weight, relative to the whole of monomer components; and a thermal foaming agent:

(m1) an alkyl (meth)acrylate monomer having an alkyl group with a carbon number of from 1 to 12, represented by the following formula (1):

[Chem. 1] $CH_2=C(R^1)COOR^2$ (1)

(in the formula (1), $R^1$ represents a hydrogen atom or a methyl group, and $R^2$ represents an alkyl group with a carbon number of from 1 to 12); and

(m2) an N-hydroxyalkyl (meth)acrylamide monomer having a hydroxyalkyl group with a carbon number of from 1 to 4, represented by the following formula (2):

[Chem. 2] $CH_2=C(R^3)CONHR^4$ (2)

(in the formula (2), $R^3$ represents a hydrogen atom or a methyl group, and $R^4$ represents a hydroxyalkyl group with a carbon number of from 1 to 4).

[2] The heat-releasable pressure-sensitive adhesive tape or sheet according to the above [1], having the heat-releasable pressure-sensitive adhesive layer on at least one surface of a pressure-sensitive adhesive layer.

[3] The heat-releasable pressure-sensitive adhesive tape or sheet according to the above [1] or [2], wherein the content of the monomer (m1) is from 45 to 96 % by weight, and the content of the monomer (m2) is from 1 to 15 % by weight, relative to the whole of monomer components.

[4] The heat-releasable pressure-sensitive adhesive tape or sheet according to any one of the above [1] to [3], wherein the content of the monomer (m1) is from 50 to 94 % by weight, and the content of the monomer (m2) is from 2 to 10 % by weight, relative to the whole of monomer components.

[5] The heat-releasable pressure-sensitive adhesive tape or sheet according to any one of the above [1] to [4], wherein the monomer (m2) is at least one member selected from N-(2-hydroxyethyl) acrylamide, N-(2-hydroxyethyl)

methacrylamide and N-methylol (meth)acrylamide.

[6] A heat-releasable pressure-sensitive adhesive tape or sheet having a heat-releasable pressure-sensitive adhesive layer containing: as an essential component, an acrylic copolymer formed of a monomer mixture comprising the following monomer (m1), monomer (m2) and monomer (m3), with a content of the monomer (m1) being from 40 to 97.5 % by weight, a content of the monomer (m2) being from 0.5 to 20 % by weight, and a content of the monomer (m3) being from 2 to 40 % by weight, relative to the whole of monomer components; and a thermal foaming agent:

(m1) an alkyl (meth)acrylate monomer having an alkyl group with a carbon number of from 1 to 12, represented by the following formula (1):

[Chem. 3] $CH_2=C(R^1)COOR^2$ (1)

(in the formula (1), $R^1$ represents a hydrogen atom or a methyl group, and $R^2$ represents an alkyl group with a carbon number of from 1 to 12);
(m2) an N-hydroxyalkyl (meth)acrylamide monomer having a hydroxyalkyl group with a carbon number of from 1 to 4, represented by the following formula (2):
[Chem. 4] $CH_2=C(R^3)CONHR^4$ (2)

(in the formula (2), $R^3$ represents a hydrogen atom or a methyl group, and $R^4$ represents a hydroxyalkyl group with a carbon number of from 1 to 4); and
(m3) a vinyl monomer having a nitrogen atom in a backbone thereof, provided that (m2) is excluded.
[7] The heat-releasable pressure-sensitive adhesive tape or sheet according to the above [6], having the heat-releasable pressure-sensitive adhesive layer on at least one surface of a pressure-sensitive adhesive layer.
[8] The heat-releasable pressure-sensitive adhesive tape or sheet according to the above [6] or [7], wherein the content of the monomer (m1) is from 45 to 96 % by weight, the content of the monomer (m2) is from 1 to 15 % by weight, and the content of the monomer (m3) is from 2.5 to 35 % by weight, relative to the whole of monomer components.
[9] The heat-releasable pressure-sensitive adhesive tape or sheet according to any one of the above [6] to [8], wherein the content of the monomer (m1) is from 50 to 94 % by weight, the content of the monomer (m2) is from 2 to 10 % by weight, and the content of the monomer (m3) is from 3 to 30 % by weight, relative to the whole of monomer components.
[10] The heat-releasable pressure-sensitive adhesive tape or sheet according to any one of the above [6] to [9], wherein the monomer (m2) is at least one member selected from N-(2-hydroxyethyl) acrylamide, N-(2-hydroxyethyl) methacrylamide and N-methylol (meth)acrylamide.
[11] The heat-releasable pressure-sensitive adhesive tape or sheet according to any one of the above [6] to [10], wherein the monomer (m3) is at least one monomer selected from an N-vinyl cyclic amide represented by the following formula (3) and a (meth)acrylamide:

[Chem. 5]

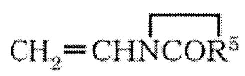

(3)

(in the formula (3), $R^5$ represents a divalent organic group).
[12] The heat-releasable pressure-sensitive adhesive tape or sheet according to any one of the above [6] to [11], wherein the monomer (m3) is at least one member selected from N-vinyl-2-pyrrolidone and N-vinyl-2-caprolactam.
[13] The heat-releasable pressure-sensitive adhesive tape or sheet according to any one of the above [1] to [12], wherein the monomer mixture does not substantially contain a carboxyl group-containing monomer as the monomer components.

EFFECT OF THE INVENTION

According to the heat-releasable pressure-sensitive adhesive sheet of the present invention, since it has the foregoing constitution, it exhibits good adhesiveness to a variety of adherends and further has both characteristics of repelling resistance and easy peelability. Also, it has good adhesion reliability to a variety of adherends, and when peeled off and disassembled or removed from an adherend at the time of completing the use purpose or at the time of recycling or the like, it can be easily peeled off and disassembled or removed.

BRIEF DESCRIPTION OF THE DRAWINGS

[Fig. 1] Fig. 1 is a schematic view (perspective view) showing an L-shaped stainless steel-made jig in L-shaped peeling test.
[Fig. 2] Fig. 2 is an explanatory view (side view) showing a stuck sample (stuck material of L-shaped stainless steel-made jig/pressure-sensitive adhesive sheet/acrylic plate) and a tensile direction at the time of measurement in L-shaped peeling test.

MODES FOR CARRYING OUT THE INVENTION

The heat-releasable pressure-sensitive adhesive tape or sheet of the present invention (hereinafter referred to simply as a "heat-releasable pressure-sensitive adhesive sheet" including a tape-shaped "heat-releasable pressure-sensitive adhesive tape", unless otherwise indicated) has a heat-releasable pressure-sensitive adhesive layer containing; as an essential component, an acrylic copolymer formed of a monomer mixture containing the following monomer (m1) and monomer (m2), with a content of the monomer (m1) being from 40 to 97.5 % by weight and a content of the monomer (m2) being from 0.5 to 20 % by weight, relative to the whole of monomer components, or an acrylic copolymer formed of a monomer mixture containing the following monomer (m1), monomer (m2) and monomer (m3), with a content of the monomer (m1) being from 40 to 97.5 % by weight, a content of the monomer (m2) being from 0.5 to 20 % by weight and a content of the monomer (m3) being from 2 to 40 % by weight, relative to the whole of monomer components; and a thermal foaming agent. Also, the heat-releasable pressure-sensitive adhesive sheet of the present invention may have, on at least one surface of a pressure-sensitive adhesive layer, a heat-releasable pressure-sensitive adhesive layer containing: as an essential component, an acrylic copolymer formed of a monomer mixture containing the following monomer (m1) and monomer (m2), with a content of the monomer (m1) being from 40 to 97.5 % by weight and a content of the monomer (m2) being from 0.5 to 20 % by weight, relative to the whole of monomer components, or an acrylic copolymer formed of a monomer mixture containing the following monomer (m1), monomer (m2) and monomer (m3), with a content of the monomer (m1) being from 40 to 97.5 % by weight, a content of the monomer (m2) being from 0.5 to 20 % by weight, and a content of the monomer (m3) being from 2 to 40 % by weight, relative to the whole of monomer components; and a thermal foaming agent.
(m1) Alkyl (meth)acrylate monomer having an alkyl group with a carbon number of from 1 to 12, represented by the following formula (1):
[Chem. 6] $CH_2=C(R^1)COOR^2$ (1)

(In the formula (1), $R^1$ represents a hydrogen atom or a methyl group, and $R^2$ represents an alkyl group with a carbon number of from 1 to 12.)
(m2) N-Hydroxyalkyl (meth)acrylamide monomer having a hydroxyalkyl group with a carbon number of from 1 to 4, represented by the following formula (2):
[Chem. 7] $CH_2=C(R^3)CONHR^4$ (2)

(In the formula (2), $R^3$ represents a hydrogen atom or a methyl group, and $R^4$ represents a hydroxyalkyl group with a carbon number of from 1 to 4.)

(m3) Vinyl monomer having a nitrogen atom in a backbone thereof (provided that (m2) is excluded)

The heat-releasable pressure-sensitive adhesive sheet of the present invention is not particularly limited so long as it has a form in which a heat-releasable pressure-sensitive adhesive layer is disposed, and the heat-releasable pressure-sensitive adhesive layer provides at least one pressure-sensitive adhesive surface (pressure-sensitive adhesive surface). The heat-releasable pressure-sensitive adhesive sheet of the present invention may be a double-coated pressure-sensitive adhesive sheet in which both surfaces of a sheet are a pressure-sensitive adhesive surface, or may be a single-coated pressure-sensitive adhesive sheet in which only one surface of a sheet is a pressure-sensitive adhesive surface. From the viewpoint of sticking two members to each other, the heat-releasable pressure-sensitive adhesive sheet of the present invention is preferably a double-coated pressure-sensitive adhesive sheet. Incidentally, in the case where a "pressure-sensitive adhesive sheet" is referred to in the present invention, it should be construed that a tape-shaped material, namely a "pressure-sensitive adhesive tape", is also included.

The heat-releasable pressure-sensitive adhesive sheet of the present invention may be a pressure-sensitive adhesive sheet of a so-called "base-less type" which does not have a base material (base material layer) (hereinafter sometimes referred to as a "base-less pressure-sensitive adhesive sheet"), or may be a pressure-sensitive adhesive sheet of a type having a base material (hereinafter sometimes referred to as a "base-provided pressure-sensitive adhesive sheet"). Examples of the foregoing base-less pressure-sensitive adhesive sheet include a heat-releasable pressure-sensitive adhesive sheet composed only of a heat-releasable pressure-sensitive adhesive layer; a heat-releasable pressure-sensitive adhesive sheet having a constitution in which a heat-releasable pressure-sensitive adhesive layer is provided on at least one surface of a pressure-sensitive adhesive layer; and so on. Also, examples of the base-provided pressure-sensitive adhesive sheet include a heat-releasable pressure-sensitive adhesive sheet having a heat-releasable pressure-sensitive adhesive layer on at least one surface of a base material; a heat-releasable pressure-sensitive adhesive sheet in which a laminated structure of a pressure-sensitive adhesive layer and a heat-releasable pressure-sensitive adhesive layer is provided on at least one surface of a base material in such a form that the base material and the pressure-sensitive adhesive layer come into contact with each other; and so on.

Furthermore, the heat-releasable pressure-sensitive adhesive sheet of the present invention may be formed in a form of being wound in a roll form, or may be formed in a form in which the sheet is laminated. That is, the heat-releasable pressure-sensitive adhesive sheet of the present invention can have a form of sheet, tape or the like.

[Heat-releasable pressure-sensitive adhesive layer]

The heat-releasable pressure-sensitive adhesive layer contains a thermal foaming agent and has a specified acrylic copolymer as a base polymer. For that reason, the pressure-sensitive adhesive surface provided by the heat-releasable pressure-sensitive adhesive layer exhibits good adhesiveness to a variety of adherends made of, as a raw material, a resin [for example, an acrylic resin, a polycarbonate, an ABS (acrylonitrile butadiene styrene) resin, a polyolefin resin (for example, polystyrene, polypropylene, polyethylene or the like), or the like] or a metal [for example, stainless steel (SUS), aluminum or the like]. Also, an increase of adhesive force to a metal with a lapse of time is few, and heat peelability is also good. Also, repelling resistance is excellent. Moreover, since a thermal foaming agent is contained, the adhesiveness is more easily lowered by a heat treatment, whereby peelability is exhibited.

Incidentally, in the heat-releasable pressure-sensitive adhesive layer, the acrylic copolymer is an essential component and is contained in an amount of 33 % by weight or more, preferably 40 % by weight or more, and more preferably 50 % by weight or more, relative to a total amount of the heat-releasable pressure-sensitive adhesive layer.

The monomer mixture forming the acrylic copolymer may be a composition containing, as essential monomers, the following monomer (m1) and following monomer (m2), with a content of the monomer (m1) being from 40 to 97.5 % by weight and a content of the monomer (m2) being from 0.5 to 20 % by weight, relative to the whole of monomer components, or may be a composition containing, as essential monomers, the following monomer (m1), following monomer (m2) and following monomer (m3), with a content of the monomer (m1) being from 40 to 97.5 % by weight, a content of the monomer (m2) being from 0.5 to 20 % by weight and a content of the monomer (m3) being from 2 to 40 % by weight, relative to the whole of monomer components.

Also, in the present invention, a monomer which is copolymerizable with the monomer (m1) and monomer (m2), or with the monomer (m1), monomer (m2) and monomer (m3), can be used as a monomer (m4) as the need arises. Namely, the monomer mixture may be a composition comprising the monomer (m1) and monomer (m2), or the monomer (m1), monomer (m2) and monomer (m4), with a content of the monomer (m1) being from 40 to 97.5 % by weight, a content of the monomer (m2) being from 0.5 to 20 % by weight and a content of the monomer (m4) being from 0 to 30 % by weight, relative to the whole of monomer components, or may be a composition comprising the monomer (m1), monomer (m2) and monomer (m3), or the monomer (m1), monomer (m2), monomer (m3) and monomer (m4), with a content of the monomer (m1) being from 40 to 97.5 % by weight, a content of the monomer (m2) being from 0.5

to 20 % by weight, a content of the monomer (m3) being from 2 to 40 % by weight, and a content of the monomer (m4) being from 0 to 30 % by weight, relative to the whole of monomer components.

Incidentally, it is important that a total content of the monomer (m1) and monomer (m2) in the case of containing the monomer (m1) and monomer (m2) as essential monomers and optionally containing the monomer (m4), or a total content of the monomer (m1), monomer (m2) and monomer (m3) in the case of containing the monomer (m1), monomer (m2) and monomer (m3) as essential monomers and optically containing the monomer (m4), is preferably 80 % by weight or more (for example, 80 % by weight or more and less than 100 % by weight), and preferably 90 % by weight or more (for example, 90 % by weight or more and less than 100 % by weight), relative to the whole of monomer components constituting the monomer mixture. This is because when the total content of these monomers is less than 80 % by weight, there may be the case of causing a fault in terms of adhesion reliability to an adherend.

In the present invention, the monomer mixture means a mixture composed only of monomer components which are to form the acrylic copolymer. In the present invention, once an acrylic pressure-sensitive adhesive composition containing a thermal foaming agent is obtained from the monomer mixture, the heat-releasable pressure-sensitive adhesive layer is formed by, using the subject acrylic pressure-sensitive adhesive composition. Incidentally, in this description, it is meant that the "pressure-sensitive adhesive composition" also includes a "composition for forming a pressure-sensitive adhesive layer".

As described previously, the acrylic pressure-sensitive adhesive composition is a composition in which a thermal foaming agent is blended and which is obtained from the monomer mixture. Although such an acrylic pressure-sensitive adhesive composition is not particularly limited, examples thereof include an acrylic pressure-sensitive adhesive composition containing a thermal foaming agent and containing an acrylic copolymer as an essential component; an acrylic pressure-sensitive adhesive composition containing a thermal foaming agent and containing a monomer mixture or its partial polymerization product as an essential component; and so on. Examples of the acrylic pressure-sensitive adhesive composition, which contains an acrylic copolymer as an essential component, include a pressure-sensitive adhesive composition of a so-called solvent type. Also, examples of the acrylic pressure-sensitive adhesive composition, which contains a monomer mixture or its partial polymerization product as an essential component, include a pressure-sensitive adhesive composition of a so-called active energy ray-curing type, and so on. Also, the acrylic pressure-sensitive adhesive composition may contain a crosslinking agent or other various additives as the need arises. Incidentally, it is meant that the foregoing "partial polymerization product" is a composition in which one or two or more components of the foregoing monomer mixture are partially polymerized.

In the case where the acrylic pressure-sensitive adhesive composition is an acrylic pressure-sensitive adhesive composition containing an acrylic copolymer as an essential component, it is important that a content of the acrylic copolymer is 30 % by weight or more, and preferably 40 % by weight or more, relative to a total amount of solid components of the subject pressure-sensitive adhesive composition.

Also, in the case where the acrylic pressure-sensitive adhesive composition is an acrylic pressure-sensitive adhesive composition containing a monomer mixture or its partial polymerization product as an essential component, it is important that a content of the subject monomer mixture or its partial polymerization product is 30 % by weight or more, and preferably 40 % by weight or more, relative to a total amount of the acrylic pressure-sensitive adhesive composition.

(m1) An alkyl (meth)acrylate having an alkyl group with a carbon number of from 1 to 12 is represented by the formula (1).

[Chem. 8] $CH_2=C(R^1)COOR^2$ (1)

(In the formula (1), $R^1$ represents a hydrogen atom or a methyl group, and $R^2$ represents an alkyl group with a carbon number of from 1 to 12.)

Incidentally, the alkyl group with a carbon number of from 1 to 12 represented by $R^2$ is a linear or branched alkyl group.

Examples of the alkyl (meth)acrylate monomer having an alkyl group (linear or branched alkyl group) with a carbon number of from 1 to 12, represented by the following formula (1), which is the monomer (m1), include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, and so on. Above all, alkyl (meth)acrylate monomers having an alkyl group with a carbon number of from 2 to 10 are preferable, and alkyl (meth)acrylate monomers having an alkyl group with a carbon number of from 4 to 8 are more preferable. Such an alkyl (meth)acrylate can be used solely or in combination of two or more kinds thereof.

A content of the monomer (m1) is from 40 to 97.5 % by weight, preferably from 45 to 96 % by weight, and more preferably from 50 to 94 % by weight, relative to a total amount of the monomer components (the whole of monomer

components) constituting the monomer mixture. When the content is less than 40 % by weight, there may be the case where flexibility or tack is insufficient; whereas when it exceeds 97.5 % by weight, there may be the case where the monomer (m2) and monomer (m3) are insufficient, so that pressure-sensitive adhesive force, repelling resistance, cohesion or the like is insufficient.

(m2) An N-hydroxyalkyl (meth)acrylamide monomer having a hydroxyalkyl group with a carbon number of from 1 to 4 is represented by the formula (2).

[Chem. 9] $CH_2=C(R^3)CONHR^4$ (2)

(In the formula (2), $R^3$ represents a hydrogen atom or a methyl group, and $R^4$ represents a hydroxyalkyl group with a carbon number of from 1 to 4.)

The monomer (m2) is able to enhance cohesion and adhesive force of the heat-releasable pressure-sensitive adhesive layer, and furthermore, it is able to enhance durability of the heat-releasable pressure-sensitive adhesive layer against a phenomenon in which a certain force is applied over a long period of time such as in repelling resistance or foaming pealing resistance test. Furthermore, since it has a hydroxyl group as a reactive functional group, it is possible to form a crosslinking structure by allowing it to react with a crosslinking agent having an isocyanate group, an epoxy group or the like. In consequence, the heat-releasable pressure-sensitive adhesive layer has excellent repelling resistance characteristic, holding power characteristic, adhesive force and holding characteristic.

Examples of the N-hydroxyalkyl (meth)acrylamide monomer having a hydroxyalkyl group with a carbon number of from 1 to 4, represented by the formula (2), which is the monomer (m2), include N-(hydroxymethyl) acrylamide, N-(hydroxymethyl) methacrylamide, N-(2-hydroxyethyl) acrylamide, N-(2-hydroxyethyl) methacrylamide, N-(2-hydroxypropyl) acrylamide, N-(2-hydroxypropyl) methacrylamide, N-(1-hydroxypropyl) acrylamide, N-(1-hydroxypropyl) methacrylamide, N-(3-hydroxypropyl) acrylamide, N-(3-hydroxypropyl) methacrylamide, N-(2-hydroxybutyl) acrylamide, N-(2-hydroxybutyl) methacrylamide, N-(3-hydroxybutyl) acrylamide, N-(3-hydroxybutyl) methacrylamide, N-(4-hydroxybutyl) acrylamide, N-(4-hydroxybutyl) methacrylamide, N-methyl-N-2-hydroxyethyl (meth)acrylamide, and so on. Above all, from the standpoint of balance among adhesive force, repelling resistance and holding characteristic, N-(2-hydroxyethyl) acrylamide, N-(2-hydroxyethyl) methacrylamide, N-(hydroxymethyl) acrylamide, N-(hydroxymethyl) methacrylamide, N-(3-hyroxypropyl) acrylamide or the like is preferable; and N-(2-hydroxyethyl) acrylamide, N-(2-hydroxyethyl) methacrylamide, N-(hydroxymethyl) acrylamide or N-(hydroxymethyl) methacrylamide is especially preferable.

A content of the monomer (m2) is from 0.5 to 20 % by weight, preferably from 1 to 15 % by weight, and more preferably from 2 to 10 % by weight, relative to a total amount of the monomer components (the whole of monomer components) constituting the monomer mixture. When the content is less than 0.5 % by weight, there may be the case where the heat-releasable pressure-sensitive adhesive layer cannot reveal repelling resistance; whereas when the content exceeds 20 % by weight, there may be the case of causing a fault in terms of tack or adhesive force of the heat-releasable pressure-sensitive adhesive layer.

In the heat-releasable pressure-sensitive adhesive sheet of the present invention, (m3) a vinyl monomer having a nitrogen atom in a backbone thereof may be used as the monomer component constituting an acrylic copolymer which is an essential component of the heat-releasable pressure-sensitive adhesive layer. When the vinyl monomer (m3) having a nitrogen atom in a backbone thereof is used, adhesive force, cohesive force or the like can be enhanced. Also, although the foregoing monomer (m2) is poor in compatibility with the monomer (m1), there is brought an effect for enhancing the compatibility by the addition of the monomer (m3) component.

The vinyl monomer (m3) having a nitrogen atom in a backbone thereof is a monomer having not only at least one or more carbon-carbon double bonds but a nitrogen atom in its molecule (molecular backbone). Incidentally, the monomer (m3) does not include the N-hydroxyalkyl (meth)acrylamide monomer (m2) having a hydroxyalkyl group with a carbon number of from 1 to 4. In this description, there may be the case where the "vinyl monomer having a nitrogen atom in a backbone thereof" is called a "nitrogen-containing vinyl monomer".

More specific examples of the nitrogen-containing vinyl monomer (m3) include one or two or more kinds of monomers selected from an N-vinyl cyclic amide represented by the formula (3) and a (meth)acrylamide.

[Chem. 10]

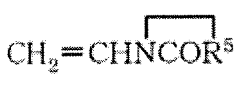

(3)

(In the formula (3), $R^5$ represents a divalent organic group.)

Incidentally, in the formula (3), $R^5$ is preferably a saturated or unsaturated hydrocarbon group, and more preferably a saturated hydrocarbon group (for example, an alkylene group with a carbon number of from 3 to 5 or the like).

Examples of the N-vinyl cyclic amide represented by the formula (3) include N-vinyl-2-pyrrolidone, N-vinyl-2-piperidone, N-vinyl-3-morpholinone, N-vinyl-2-caprolactam, N-vinyl-1,3-oxazin-2-one, N-vinyl-3,5-morpholinedione, N-vinylpyridine, N-vinylpyrimidine, N-vinylpiperazine, N-vinylpyrrole, and so on. Above all, N-vinyl-2-pyrrolidone or N-vinyl-2-caprolactam is especially preferable.

Also, examples of the (meth)acrylamide include (meth)acrylamide, an N-alkyl (meth)acrylamide, an N,N-dialkyl (meth)acrylamide, and so on. Examples of the N-alkyl (meth)acrylamide include N-ethyl (meth)acrylamide, N-n-butyl (meth)acrylamide, N-octyl acrylamide, and so on. Furthermore, there are exemplified an amino group-containing (meth) acrylamide such as dimethylaminoethyl (meth)acrylamide or diethylaminoethyl (meth)acrylamide, and so on. Examples of the N,N-dialkyl (meth)acrylamide include N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide, N,N-di(t-butyl) (meth)acrylamide, and so on. Above all, from the standpoint of easiness of taking balance between adhesion reliability and flexibility of the pressure-sensitive adhesive sheet, it is preferable to use a (meth)acrylamide having one or two N-alkyl groups with a carbon number of from 1 to 4, and more preferably 1 or 2 (for example, an N,N-dialkyl acrylamide such as N,N-diethyl acrylamide, or N,N-dimethyl acrylamide).

Also, examples of other nitrogen-containing vinyl monomer than the N-vinyl cyclic amide and (meth)acrylamide include: a cyclic (meth)acrylamide having an N-acryloyl group such as (meth)acryloyl morpholine, (meth)acryloyl pyrrolidone, or (meth)acryloyl pyrrolidine; a monomer having an amino group such as aminoethyl (meth)acrylate, N,N-dimethylaminoethyl (meth)acrylate, or N,N-dimethylaminopropyl (meth)acrylate; a monomer having a maleimide backbone such as N-cyclohexyl maleimide, or N-phenyl maleimide; an itaconimide monomer such as N-methyl itaconimide, N-ethyl itaconimide, N-butyl itaconimide, N-2-ethylhexyl itaconimide, N-lauryl itaconimide, or N-cyclohexyl itaconimide; a cyanoacrylate monomer such as acrylonitrile or methacrylonitrile; a succinimide monomer such as N-(meth)acryloyloxymethylene succinimide, N-(meth)acryloyl-6-oxyhexamethylene succinimide, or N-(meth)acryloyl-8-oxyoctamethylene succinimide; and so on.

Incidentally, from the standpoint of easiness of taking balance of characteristics of adhesive force, cohesive force, and flexibility and processability of the pressure-sensitive adhesive sheet, it is effective to use the foregoing N-vinyl cyclic amide represented by the formula (3) and the (meth)acrylamide as the nitrogen-containing vinyl monomer (m3) in combination.

A content of the nitrogen-containing vinyl monomer (m3) is from 2 to 40 % by weight, preferably from 2.5 to 35 % by weight, and more preferably from 3 to 30 % by weight, relative to a total amount of the monomer components constituting the monomer mixture. When the content is less than 2 % by weight, there may be the case of causing a fault from the standpoint that sheet processability deteriorates, or adhesion reliability is hardly exhibited, or the like; whereas when the content exceeds 40 % by weight, there may be the case of causing a fault from the standpoint that flexibility of the sheet deteriorates, or tack deteriorates, or the like.

Although the monomer (m2) is common to the foregoing monomer (m3) from the standpoint that it has a carbon-carbon double bond and a nitrogen atom in its molecular backbone, it is excluded from the foregoing monomer (m3). Incidentally, the monomer (m3) may be used solely or in combination of two or more kinds thereof.

Also, in the present invention, a monomer which is the monomer (m4) and which is copolymerizable with the foregoing monomer (m1) and monomer (m2), or the foregoing monomer (m1), monomer (m2) and monomer (m3) (hereinafter sometimes referred to simply as a "copolymerizable monomer") may be used as a monomer component constituting the acrylic copolymer together with the foregoing monomer (m1) and monomer (m2), or together with the foregoing monomer (m1), monomer (m2) and monomer (m3). When the copolymerizable monomer is used, such is useful from the standpoint of easiness of taking balance in adhesion characteristics. Incidentally, the monomer (m4) can be used solely or in admixture of two or more kinds thereof.

Incidentally, it is meant that the balance in adhesion characteristics is balance in various characteristics of adhesive force, tack, durability, holding characteristic and repelling resistance characteristic.

Examples of such a copolymerizable monomer (m4) include a carboxyl group-containing monomer such as an ethylenically unsaturated monocarboxylic acid (for example, acrylic acid, methacrylic acid, crotonic acid, carboxyethyl acrylate, carboxypentyl acrylate or the like), an ethylenically unsaturated dicarboxylic acid (for example, maleic acid, itaconic acid, citraconic acid or the like), or an ethylenically unsaturated dicarboxylic acid anhydride (for example, maleic anhydride, itaconic anhydride or the like); a hydroxyl group-containing monomer such as 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth) acrylate, 10-hydroxydecyl (meth)acrylate, 12-hydroxylauryl (meth)acrylate, or (4-hydroxymethylcyclohexyl)methyl acrylate; a sulfonic acid group-containing monomer such as 2-acrylamide-2-methylpropnae sulfonic acid or sulfopropyl acrylate; a phosphate group-containing monomer such as 2-hydroxyethylacryloyl phosphate; a vinyl monomer such as vinyl acetate, N-vinylcarboxylic acid amide, or styrene; an acrylic acid ester monomer such as glycidyl (meth)acrylate, tetrahydrofurfuryl (meth)acrylate, polyethylene glycol (meth)acrylate, polypropylene glycol (meth)acrylate, fluorine (meth)acrylate, silicon (meth)acrylate, or 2-methoxyethyl acrylate; and so on.

Also, as the copolymerizable monomer (m4), there can be exemplified an alkyl (meth)acrylate monomer having a cyclic alkyl group, such as cyclopentyl (meth)acrylate, cyclohexyl (meth)acrylate, or isobornyl (meth)acrylate.

In the case where the monomer (m4) is used as the monomer component, a content of the monomer (m4) is preferably 30 % by weight or less (for example, from 0 to 30 % by weight), and preferably 20 % by weight or less (for example, from 0 to 20 % by weight), relative to a total amount of the monomer components (the whole of monomer components) constituting the monomer mixture. When the content exceeds 30 % by weight, there may be the case of causing a fault from the standpoint of balance between adhesion reliability and flexibility.

In the present invention, the monomer (m1) and monomer (m2), or the monomer (m1), monomer (m2) and monomer (m3) are made essential as the constituent monomer components of the acrylic copolymer which is the essential component of the heat-releasable pressure-sensitive adhesive layer. For that reason, even when the foregoing carboxyl group-containing monomer is not substantially contained as the monomer (m4), similar to the case where the foregoing carboxyl group-containing monomer (in particular, acrylic acid) is used as the monomer (m4), cohesive force of the heat-releasable pressure-sensitive adhesive layer can be enhanced, and thereby exhibiting adhesion reliability to an adherend. Incidentally, it is meant by the terms "not substantially contained" that the monomer (m4) is not contained at all, or its content is not more than 0.1 % by weight relative to a total amount of the monomer components. For example, it is meant by the matter that the carboxyl group-containing monomer is "not substantially contained" as the monomer component that the carboxyl group-containing monomer is not contained at all as the monomer component, or its content is not more than 0.1 % by weight in the whole of monomer components.

In the present invention, when the carboxyl group-containing monomer is not substantially contained as the constituent monomer component of the acrylic copolymer which is the essential component of the heat-releasable pressure-sensitive adhesive layer, an interaction to be generated between the carboxyl group-containing monomer and the adherend is not generated, and therefore, good adhesion reliability to an adherend can be maintained, thereby exhibiting good heat peelability.

For example, in the case of using a heat-releasable pressure-sensitive adhesive sheet, which does not substantially contain such a carboxyl group-containing monomer, for a metal-made adherend, repelling resistance can be exhibited while exhibiting adhesion reliability to a metal, namely desired adhesiveness to a metal, and furthermore, an increase of adhesiveness with a lapse of time to be caused due to an interaction (for example, a hydrogen bond between an acid component and a metal, or the like) which is usually generated in the heat-releasable pressure-sensitive adhesive sheet containing a carboxyl group-containing monomer is not generated, and therefore, easy peelability is revealed by means of a heat treatment.

In the present invention, the acrylic copolymer is formed by adopting a known or customary polymerization method, for example, a solution polymerization method, an emulsion polymerization method, a bulk polymerization method, a photopolymerization method using a photopolymerization initiator or the like. Above all, from the standpoint of obtaining a pressure-sensitive adhesive layer with excellent quality stability, it is preferable to adopt a solution polymerization method or a photopolymerization method in the present invention.

Adoption of a solution polymerization method is advantageous from the standpoint that a layer with excellent uniformity of thickness can be easily obtained.

In the solution polymerization method, a variety of general solvents can be used. Examples of such a solvent include an organic solvent for example, an ester such as ethyl acetate, or n-butyl acetate; an aromatic hydrocarbon such as toluene, or benzene; an aliphatic hydrocarbon such as n-hexane, or n-heptane; an alicyclic hydrocarbon such as cyclohexane, or methyl cyclohexane; a ketone such as methyl ethyl ketone, or methyl isobutyl ketone; and so on. The solvent can be used solely or in combination of two or more kinds thereof.

Also, in the solution polymerization method, it is preferable to utilize a curing reaction by heat using a thermal polymerization initiator. Examples of such a thermal polymerization initiator include an azo based thermal polymerization initiator such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, or 2,2'-azobis(N,N'-dimethyleneisobutylamidine) dihydrochloride; a peroxide based thermal polymerization initiator such as dibenzoyl peroxide or tert-butyl permaleate; a redox based thermal polymerization initiator; and so on. Incidentally, the thermal polymerization initiator can be used solely or in combination of two or more kinds thereof.

A use amount of the thermal polymerization initiator is not particularly limited, and it may be a range which has hitherto been utilized as the thermal polymerization initiator. For example, the use amount is preferably from 0.01 to 5 parts by weight, and more preferably from 0.05 to 3 parts by weight based on 100 parts by weight of the monomer components constituting the acrylic copolymer. When the use amount is less than 0.01 pars by weight, there may be the case where a time of the polymerization becomes long, or the case where a molecular weight becomes too high, so that a viscosity becomes too high; whereas when it exceeds 5 parts by weight, there may be the case where the molecular weight becomes low, so that balance in adhesion characteristics of the pressure-sensitive adhesive deteriorates.

Also, adoption of a photopolymerization method is advantageous especially from the standpoint of workability, thick coating properties or less load to the environment.

In the photopolymerization method, it is preferable to utilize a curing reaction with an active energy ray using a photopolymerization initiator. Examples of such an active energy ray include an ionizing radiation such as an $\alpha$-ray, a $\beta$-ray, a $\gamma$-ray, a neuron beam, or an electron beam; an ultraviolet ray; and so on. In particular, an ultraviolet ray is suitably used. Incidentally, irradiation energy of the active energy ray or its irradiation time or the like is not particularly limited within a range where the reaction of the monomer components is not inhibited.

The photopolymerization initiator is not particularly limited, and for example, there can be used a ketal based photopolymerization initiator, an $\alpha$-hydroxyketone based photopolymerization initiator, an $\alpha$-aminoketone based photopolymerization initiator, an acylphosphine oxide based photopolymerization initiator, a benzoin ether based photopolymerization initiator, an acetophenone based photopolymerization initiator, an $\alpha$-ketol based photopolymerization initiator, an aromatic sulfonyl chloride based photopolymerization initiator, a photoactive oxime based photopolymerization initiator, a benzoin based photopolymerization initiator, a benzil based photopolymerization initiator, a benzophenone based photopolymerization initiator, a thioxanthone based photopolymerization initiator, or the like. Incidentally, the photopolymerization initiator can be used solely or in combination of two or more kinds thereof can be used.

Specifically, examples of the ketal based photopolymerization initiator include 2,2-dimethoxy-1,2-diphenylethan-1-one (trade name "Irgacure 651", manufactured by Ciba Japan K.K.), benzyl dimethyl ketal, and so on. Examples of the $\alpha$-hydroxyketone based photopolymerization initiator include 1-hydroxy-cyclohexyl-phenyl ketone (a trade name "Irgacure 184", manufactured by Ciba Japan K.K.), 2-hydroxy-2-methyl-1-phenyl-propan-1-one (trade name "Darocure 1173", manufactured by Ciba Japan K.K.), 1-[4-(2-hydroxyethoxy)-phenyl]-2-hydroxy-2-methyl-1-propan-1-one (trade name "Irgacure 2959", manufactured by Ciba Japan K.K.), and so on. Examples of the $\alpha$-aminoketone based photopolymerization initiator include 2-methyl-1-[4-(methylthio)phenyl]-2-morpholinopropan-1-one (trade name "Irgacure 907", manufactured by Ciba Japan K.K.), 2-benzyl-2-dimethylamino-1-(4-morpholinophenyl)butanone-1 (trade name "Irgacure 369", manufactured by Ciba Japan K.K.), and so on. Examples of the acylphosphine oxide based photopolymerization initiator include 2,4,6-trimethylbenzoyldiphenylphosphine oxide (trade name "Lucirin TPO", manufactured by BASF AG) and so on. Examples of the benzoin ether based photopolymerization initiator include benzoin methyl ether, benzoin ethyl ether, benzoin propyl ether, benzoin isopropyl ether, benzoin isobutyl ether, anisole methyl ether, and so on. Examples of the acetophenone based photopolymerization initiator include 2,2-diethoxyacetophenone, 2,2-dimethoxy-2-phenylacetophenone, 1-hydroxycyclohexyl phenyl ketone, 4-phenoxydichloroacetophenone, 4-t-butyldichloroacetophenone, and so on. Examples of the $\alpha$-ketol based photopolymerization initiator include 2-methyl-2-hydroxypropiophenone, 1-[4-(2-hydroxyethyl)-phenyl]-2-hydroxy-methylpropan-1-one, and so on. Examples of the aromatic sulfonyl chloride based photopolymerization initiator include 2-naphthalenesulfonyl chloride and so on. Examples of the photoactive oxime based photopolymerization initiator include 1-phenyl-1,1-propanedione-2-(o-ethoxycarbonyl)-oxime and so on. Examples of the benzoin based photopolymerization initiator include benzoin and so on. Examples of the benzil based photopolymerization initiator include benzil and so on. Examples of the benzophenone based photopolymerization initiator include benzophenone, benzoylbenzoic acid, 3,3'-dimethyl-4-methoxybenzophenone, polyvinylbenzophenone, $\alpha$-hydroxycyclohexyl phenyl ketone, and so on. Examples of the thioxanthone based photopolymerization initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, dodecylthioxanthone, and so on.

A use amount of the photopolymerization initiator is not particularly limited, and for example, it is preferably from 0.001 to 5 parts by weight, and more preferably from 0.002 to 3 parts by weight based on 100 parts by weight of the monomer components constituting the acrylic copolymer. When the use amount is less than 0.001 parts by weight, there may be the case where a time required for the polymerization reaction becomes long; whereas when it exceeds 5 parts by weight, there may be the case where a molecular weight of the polymerization product becomes low, so that balance in adhesion characteristics is hardly taken.

In the heat-releasable pressure-sensitive adhesive layer, since the thermal foaming agent is blended, adhesive force is lowered or vanished due to expansion or foaming of the thermal foaming agent by means of a heat treatment. Such a heat foaming agent is not particularly limited, and for example, a known thermal foaming agent can be properly selected and used. Above all, a microencapsulated foaming agent can be suitably used. Examples of such a microencapsulated foaming agent include a microsphere obtained by containing a substance which is to easily gasify and expand upon heating, such as isobutane, propane, or pentane, into a shell with elasticity (sometimes referred to as a "heat-expandable microsphere").

In many cases, the shell of the heat-expandable microsphere is in general formed of a thermoplastic substance, a heat-fusible substance, a substance which is ruptured by heat expansion, or the like. Also, examples of the substance forming a shell of the heat-expandable microsphere include a vinylidene chloride/acrylonitrile copolymer, polyvinyl alcohol, polyvinyl butyral, polymethyl methacrylate, polyacrylonitrile, polyvinylidene chloride, polysulfone, and so on. The heat-expandable microsphere can be manufactured by a customary method, for example, a coacervation method, an

interfacial polymerization method or the like.

As the heat-expandable microsphere, a commercially available product can also be utilized. Such a commercially available product of the thermal foaming agent is not particularly limited, and examples thereof include trade names "Matsumoto Microsphere F-30", "Matsumoto Microsphere F-50", "Matsumoto Microsphere F-50DFU", "Matsumoto Microsphere F-80S" and "Matsumoto Microsphere F-85" (all of which are manufactured by Matsumoto Yushi-Seiyaku Co., Ltd.); a trade name "Expancel Du" (manufactured by Akzo Nobel Surface Chemistry AB); and so on.

From the standpoint of dispersibility, thin layer formability or the like, an average particle diameter of the heat-expandable microsphere is in general from about 1 to 80 um, and preferably from about 3 to 50 μm.

Also, for the purpose of efficiently lowering the adhesiveness of the heat-releasable pressure-sensitive adhesive layer by means of a heat treatment, the heat-expandable microsphere is preferably one with appropriate strength such that it is not ruptured until a volume expansion rate becomes 5 times or more, and especially 10 times or more. Incidentally, in the case of using a heat-expandable microsphere which is ruptured at a low expansion rate, or in the case of using a non-microencapsulated thermal foaming agent, there may be the case where an adhesive area between the heat-releasable pressure-sensitive adhesive layer and the adherend is not sufficiently reduced, so that good peelability is not obtained, or a characteristic of being separated or disassembled upon heating or a characteristic of being peeled off and disassembled or removed is lowered.

Although a use amount of the thermal foaming agent varies depending upon its kind, it is, for example, from 10 to 200 parts by weight, preferably from 20 to 125 parts by weight, and more preferably from 25 to 100 parts by weight, based on 100 parts by weight of the monomer components constituting the acrylic copolymer. When the use amount is less than 10 parts by weight, there is a concern that expansion deformation of the heat-releasable pressure-sensitive adhesive layer after heat treatment does not sufficiently occur, so that separation or disassembling upon heating, for example, peeling at an interface between the heat-releasable pressure-sensitive adhesive layer and the adherend does not occur; whereas when it exceeds 200 parts by weight, cohesive failure of the heat-releasable pressure-sensitive adhesive layer easily occurs.

Also, examples of other thermal foaming agent include a variety of inorganic foaming agents or organic foaming agents. Representative examples of the inorganic foaming agent include ammonium carbonate, ammonium hydrogencarbonate, sodium hydrogencarbonate, ammonium nitrite, sodium borohydride, an azide, and so on. Also, representative examples of the organic foaming agent include water; a chlorofluoroalkane such as trichloromonofluoromethane, or dichloromonofluoromethane; an azo based compound such as azobisisobutyronitrile, azodicarbonamide, or barium azodicarboxylate; a hydrazine based compound such as p-toluenesulfonyl hydrazide, diphenylsulfone-3,3'-disulfonyl hydrazide, 4,4'-oxybis(benzenesulfonyl hydrazide), or allyl bis(sulfonyl hydrazide); a semicarbazide based compound such as p-toluylenesulfonyl semicarbazide or 4,4'-oxybis(benzenesulfonyl semicarbazide); a triazole based compound such as 5-morpholyl-1,2,3,4-thiatriazole; an N-nitroso based compound such as N,N'-dinitrosopentamethylenetetramine or N,N'-dimethyl-N,N'-dinitrosoterephthalamide; and so on. Incidentally, the thermal foaming agent can be used solely or in combination of two or more kinds thereof. Furthermore, an auxiliary foaming agent may be contained as the need arises.

In the present invention, from the standpoint of enhancing the durability by forming the heat-releasable pressure-sensitive adhesive layer in a crosslinked structure, it is preferable to add a crosslinking agent (crosslinking component) to the acrylic pressure-sensitive adhesive composition.

Although the crosslinking agent is not particularly limited, for example, a polyisocyanate based compound, an epoxy based compound, an aziridine based compound, a metal chelae based compound or a melamine based compound is preferably used. Also, a polyfunctional (meth)acrylate can be utilized as the crosslinking agent. Above all, from the standpoints of easiness of taking balance in adhesion characteristics and workability, a polyisocyanate based compound or a polyfunctional monomer is suitable. Incidentally, the crosslinking agent can be used solely or in admixture of two or more kinds thereof.

Examples of the polyisocyanate based compound include tolylene diisocyanate, hexamethylene diisocyanate, polymethylene polyphenyl isocyanate, diphenylmethane diisocyanate, a dimer of diphenylmethane diisocyanate, a reaction product of trimethylolpropane and tolylene diisocyanate, a reaction product of trimethylolpropane and hexamethylene diisocyanate, a polyether polyisocyanate, a polyester polyisocyanate, and so on.

Although a compound having at least two (meth)acryloyl groups can be used as the polyfunctional (meth) acrylate without particular limitations, examples thereof include trimethylolpropane tri(meth)acrylate, tetramethylolmethane tetraacrylate, pentaerythritol di(meth)acrylate, pentaerythritol tri(meth)acrylate, pentaerythritol tetra(meth)acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxy penta(meth)acrylate, dipentaerythritol hexa(meth)acrylate, polyethylene glycol di(meth)acrylate, hexanediol di(meth)acrylate, (poly)ethylene glycol di(meth)acrylate, (poly)propylene glycol di(meth)acrylate, neopentyl glycol di(meth)acrylate, tetramethylolmethane tri(meth)acrylate, allyl (meth)acrylate, vinyl (meth)acrylate, epoxy acrylate, a polyester acrylate, urethane acrylate, a reactive hyper-branched polymer having plural (meth)acryloyl groups in ends thereof [for example, trade names "CN2300", "CN2301" and "CN2320" (all

of which are manufactured by SARTOMER), or the like], and so on.

Although an addition amount of the crosslinking agent is not particularly limited, for example, in the case where the acrylic pressure-sensitive adhesive composition is an acrylic pressure-sensitive adhesive composition containing an acrylic copolymer as an essential component, it is preferably from 0.001 to 5 parts by weight, preferably from 0.002 to 4 parts by weight, and more preferably from 0.002 to 3 parts by weight, based on 100 parts by weight of the acrylic copolymer. When the addition amount is less than 0.001 parts by weight, there is a concern that cohesive force of the heat-releasable pressure-sensitive adhesive layer deteriorates; whereas when it exceeds 5 parts by weight, there is a concern that flexibility or tack of the heat-releasable pressure-sensitive adhesive layer deteriorates.

Also, in the case where the acrylic pressure-sensitive adhesive composition is an acrylic pressure-sensitive adhesive composition containing a monomer mixture or its partial polymerization product as an essential component, the addition amount of the crosslinking agent is expressed by substituting the foregoing basis of "100 parts by weight of the acrylic copolymer" with "100 parts by weight of a total amount of the monomer components constituting the acrylic copolymer". That is, it is preferably from 0.001 to 5 parts by weight, preferably from 0.002 to 4 parts by weight, and more preferably from 0.002 to 3 parts by weight, based on 100 parts by weight of a total amount of the monomer components constituting the acrylic copolymer.

Examples of other additive include a tackifier such as a rosin derivative resin, a polyterpene resin, a petroleum resin, or an oil-soluble phenol resin; a plasticizer; a filler; an anti-aging agent; a surfactant; and so on. Also, a crosslinking accelerator may be used. Such an additive is used within a range where the effect of the present invention is not inhibited.

Although a method of forming an acrylic pressure-sensitive adhesive composition for forming the heat-releasable pressure-sensitive adhesive layer is not particularly limited, examples thereof include a method of uniformly mixing an acrylic copolymer obtained from the monomer mixture, a thermal foaming agent and an additive to be added as the need arises; a method of uniformly mixing a composition obtained by polymerizing a part of the monomer mixture, with a thermal foaming agent and an additive to be added as the need arises; and so on.

For example, in the case where an acrylic copolymer is formed by means of solution polymerization, the acrylic pressure-sensitive adhesive composition containing the acrylic copolymer as an essential component is formed by heating a composition containing a monomer mixture, an organic solvent and an additive to be added as the need arises, such as a thermal polymerization initiator, to obtain a composition containing an acrylic copolymer, and adding a thermal foaming agent and an additive to be added as the need arises to the subject composition. Also, the acrylic pressure-sensitive adhesive composition containing a monomer mixture or its partial polymerization product as an essential component is formed by adding a photopolymerization initiator to a monomer mixture and irradiating the mixture with an active energy ray to obtain a composition containing a partial polymerization product, a part of which has been polymerized, and adding a thermal foaming agent and an additive to be added as the need arises to the subject composition.

The heat-releasable pressure-sensitive additive layer is formed by coating such an acrylic pressure-sensitive adhesive composition on an appropriate support to form a coating layer and further subjecting the subject coating layer to heating, drying, irradiation with an active energy ray, or the like as the need arises.

Also, a coating method which is adopted in performing coating is not particularly limited, and a usual method can be adopted. Examples of such a coating method include a slot die method, a reverse gravure coating method, a micro gravure method, a dipping method, a spin coating method, a brush coating method, a roll coating method, a flexo printing method, and so on. Also, as a coating tool which is used at the time of coating, a generally used coating tool can be used without particular limitations. Examples of such a coating tool include a roll coater such as a reverse coater or a gravure coater; a curtain coater; a lip coater; a die coater; a knife coater; and so on.

In the heat-releasable pressure-sensitive adhesive layer, from the standpoints of heat resistance and durability, a gel fraction (solvent-insoluble content) is preferably from 20 to 98 % by weight, and more preferably from 25 to 95 % by weight. When the gel fraction is less than 20 % by weight, there may be the case where a cohesive force is insufficient, so that adhesion reliability or processability deteriorates; whereas when it exceeds 98 % by weight, there is a concern that tack is insufficient, or adhesion reliability deteriorates.

The gel fraction of the heat-releasable pressure-sensitive adhesive layer is determined in the following manner. First of all, a porous polytetrafluoroethylene film (trade name "Nitoflon (registered trademark) NTF-1122", manufactured by Nitto Denko Corporation, thickness: 85 μm) is cut out into a size of 100 mm x 100 mm; a kite string (thickness: 1.5 mm) is cut into a length of about 100 mm; and weights thereof are measured (the weight of the porous polytetrafluoroethylene film and kite string is defined as a "weight (A)"). Subsequently, a prescribed amount (about 1 g) of the heat-releasable pressure-sensitive adhesive layer is enclosed with the porous polytetrafluoroethylene film, and an enclosed opening is tied using the kite string, thereby fabricating a package having the heat-releasable pressure-sensitive adhesive layer enclosed therein (sometimes referred to as a "heat-releasable pressure-sensitive adhesive layer-containing package"). A weight of this heat-releasable pressure-sensitive adhesive layer-containing package is measured, and the weight (A) of the porous polytetrafluoroethylene film and kite string is subtracted from the weight of the heat-releasable pressure-sensitive adhesive layer-containing package, thereby determining a weight of the heat-releasable pressure-sensitive adhesive layer. Incidentally, the weight of the heat-releasable pressure-sensitive adhesive layer is defined as a weight (B). Subsequently, the heat-releasable pressure-sensitive adhesive layer-containing package is immersed in 45 mL of ethyl acetate at room temperature (for example, 23 °C) for 7 days, and only a sol component in the heat-releasable pressure-sensitive adhesive layer is allowed to be eluted out of the porous polytetrafluoroethylene film. Then, after the immersion, the heat-releasable pressure-sensitive adhesive layer-containing package having been immersed in ethyl acetate for 7 days is taken out, and the ethyl acetate attached onto the porous polytetrafluoroethylene film is wiped off and dried with a dryer at 130 °C for 2 hours. After drying, a weight of the heat-releasable pressure-sensitive adhesive layer-containing package is measured. The weight of this heat-releasable pressure-sensitive adhesive layer-containing package is defined as a weight (C).
Then, the gel fraction (% by weight) of the heat-releasable pressure-sensitive adhesive layer is calculated according to the following expression.

$$\text{Gel fraction (\% by weight)} = [(C - A)/B \times 100]$$

Although a thickness of the heat-releasable pressure-sensitive adhesive layer is not particularly limited, from the standpoint of seeking to make both adhesion reliability to an adherend and peelability from the adhered by means of a heat treatment compatible with each other, it is preferably from 3 to 200 μm, more preferably from 4 to 150 μm, and still more preferably from 5 to 100 μm. Incidentally, the heat-releasable pressure-sensitive adhesive layer may have a single-layered form or may have a laminated form.

[Pressure-sensitive adhesive layer]

In the present invention, the pressure-sensitive adhesive layer is a layer which is provided as the need arises and is a layer which is provided in a form of coming into contact with the heat-releasable pressure-sensitive adhesive layer. In a heat-releasable pressure-sensitive adhesive sheet having a pressure-sensitive adhesive layer on one surface of a heat-releasable pressure-sensitive adhesive layer, in general, the pressure-sensitive adhesive layer provides one pressure-sensitive adhesive surface. In a heat-releasable pressure-sensitive adhesive sheet having a pressure-sensitive adhesive layer on at least one surface of a heat-releasable pressure-sensitive adhesive layer, the pressure-sensitive adhesive layer imparts appropriate elasticity, flexibility and sheet holding characteristic.
The composition forming the pressure-sensitive adhesive layer (sometimes referred to as a "pressure-sensitive adhesive composition") includes both a composition in which an additive or the like is blended in a base polymer constituting the pressure-sensitive adhesive layer as the need arises and a composition in which an additive or the like is blended, in a monomer mixture or its partial polymerization product forming a base polymer constituting the pressure-sensitive adhesive layer, as the need arises. Incidentally, it is meant that the partial polymerization product is not a compound which has been completely polymerized. Examples thereof include a composition in a syrup form having a conversion of polymerization of about 10 % by weight, which is obtained by polymerizing a part of the monomer components, and so on.
The base polymer is not particularly limited and can be properly selected and used among known base polymers. As such a base polymer, for example, there can be used an acrylic polymer, a rubber based polymer, a vinyl alkyl ether based polymer, a silicone based polymer, a polyester based polymer, a polyamide based polymer, a urethane based polymer, a fluorine based polymer, an epoxy based polymer, or the like. In particular, in the present invention, among these base polymers, an acrylic polymer is suitably used from the standpoint of adhesiveness to the heat-releasable pressure-sensitive adhesive layer. That is, in the present invention, the pressure-sensitive adhesive layer is preferably an acrylic pressure-sensitive adhesive layer. Furthermore, an acrylic viscoelastic material layer is preferable because of a high degree of freedom of designing characteristics over a wide range such as tack, elastic modulus, and low-temperature or high-temperature adhesiveness.
The foregoing acrylic polymer is a polymer containing an alkyl (meth)acrylate as a monomer main component. Examples of such an alkyl (meth)acrylate include an alkyl (meth)acrylate monomer having a linear or branched alkyl group. Examples of such an alkyl (meth)acrylate monomer include an alkyl (meth)acrylate having an alkyl group with a carbon number of from 1 to 20, such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, or eicosyl (meth)acrylate. Above all, an alkyl (meth)acrylate having an alkyl group with a carbon number

of from 2 to 14 is preferable, and an alkyl (meth)acrylate having an alkyl group with a carbon number of from 2 to 10 is more preferable. Incidentally, such an alkyl (meth)acrylate can be solely or in combination of two or more kinds thereof.

Also, examples of the alkyl (meth)acrylate include an alkyl (meth)acrylate monomer having a cyclic alkyl group, such as cyclopentyl (meth)acrylate, cyclohexyl (meth)acrylate, or isobornyl (meth)acrylate.

Incidentally, in view of the fact that the alkyl (meth)acrylate is a monomer main component of the acrylic polymer, it is important that a content of the alkyl (meth)acrylate is 60 % by weight or more, and preferably 80 % by weight or more, relative to a total amount of the monomer components constituting the acrylic polymer.

Incidentally, in addition to the main monomer component, a copolymerizable monomer may be used as the monomer component for the base polymer of the pressure-sensitive adhesive layer. By using a copolymerizable monomer as the monomer component, for example, characteristics such as elasticity or flexibility can be improved, or cohesive force of the pressure-sensitive adhesive layer is enhanced, whereby adhesiveness to the heat-releasable pressure-sensitive adhesive layer can be more enhanced. Incidentally, the copolymerizable monomer can be used solely or in combination of two or more kinds thereof.

For example, in the case where the pressure-sensitive adhesive layer is an acrylic pressure-sensitive adhesive layer, the acrylic polymer as the base polymer may contain, as a monomer component, a copolymerizable monomer such as a polar group-containing monomer or a polyfunctional monomer.

Examples of the foregoing polar group-containing monomer include a carboxyl group-containing monomer or its anhydride, a hydroxyl group-containing monomer, a phosphate group-containing monomer, an amide group-containing monomer, an amino group-containing monomer, a glycidyl group-containing monomer, a cyano acrylate based monomer, a heterocyclic ring-containing vinyl monomer, and so on. Examples of the carboxyl group-containing monomer or its anhydride include (meth)acrylic acid, carboxyethyl (meth)acrylate, carboxypentyl (meth)acrylate, itaconic acid, maleic acid, fumaric acid, crotonic acid, isocrotonic acid, maleic anhydride, and so on. Examples of the hydroxyl group-containing monomer include 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)-methyl acrylate, and so on. Examples of the phosphate group-containing monomer include 2-acrylamido-2-methylpropanesulfonic acid, sulfopropyl acrylate, and so on. Examples of the amide group-containing monomer include (meth)acrylamide, N,N-dimethyl (meth)acrylamide, N-methylol (meth)acrylamide, hydroxyethyl acrylamide, N-methoxymethyl (meth)acrylamide, N-butoxymethyl (meth)acrylamide, and so on. Examples of the amino group-containing monomer include aminoethyl (meth)acrylate, dimethylaminoethyl (meth)acrylate, t-butylaminoethyl (meth)acrylate, and so on. Examples of the glycidyl group-containing monomer include glycidyl (meth)acrylate, methylglycidyl (meth)acrylate, and so on. Examples of the cyano acrylate based monomer include acrylonitrile, methacrylonitrile, and so on. Examples of the heterocyclic ring-containing vinyl monomer include, in addition to N-vinyl-2-pyrrolidone and (meth)acryloylmorpholine, N-vinylpyridine, N-vinylpiperidone, N-vinylpyrimidine, N-vinylpiperazine, N-vinylpyrazine, N-vinylpyrrole, N-vinylimidazole, N-vinyloxazole, and so on.

From the standpoint of achieving an appropriate cohesive force, as the polar group-containing monomer, an amide group-containing monomer, a heterocyclic ring-containing vinyl monomer, a carboxyl group-containing monomer, or a hydroxyl group-containing monomer is preferable, and hydroxymethyl acrylamide, N-vinyl-2-pyrrolidone, acrylic acid, 2-hydroxyethyl acrylate or the like is especially preferable.

A content of the polar group-containing monomer is preferably 40 % by weight or less (for example, from 1 to 40 % by weight), and more preferably from 2 to 37 % by weight, relative to a total amount of the monomer components constituting the acrylic polymer. When the content of the polar group-containing monomer exceeds 40 % by weight, there is a concern that flexibility of the pressure-sensitive adhesive layer is hindered, so that adhesiveness to an adherend with concaves and convexes or the like deteriorates. Also, when the content of the polar group-containing monomer is less than 1 % by weight, there is a concern that cohesive force of the pressure-sensitive adhesive layer deteriorates, so that holding performance as a pressure-sensitive adhesive sheet deteriorates, or processability at the time of cutting or punching out the sheet, or the like deteriorates.

Although the foregoing polyfunctional monomer is not particularly limited so far as it is a compound having two or more (meth)acryloyl groups, examples thereof include trimethylolpropane tri(meth)acrylate, tetramethylolmethane tetraacrylate, pentaerythritol di(meth)acrylate, pentaerythritol tri(meth)acrylate, pentaerythritol tetra(meth)acrylate, 1,2-ethylene glycol di(meth)acrylate, 1,4-buthylene glycol di(meth)acrylate, 1,6-hexanediol di(meth)acrylate, 1,12-dodecanediol di(meth)acrylate, dipentaerythritol monohydroxy penta(meth)acrylate, dipentaerythritol hexa(meth)acrylate, polyethylene glycol di(meth)acrylate, hexanediol di(meth)acrylate, (poly)ethylene glycol di(meth)acrylate, (poly)propylene glycol di(meth)acrylate, neopentyl glycol di(meth)acrylate, tetramethylolmethane tri(meth)acrylate, allyl (meth)acrylate, vinyl (meth)acrylate, epoxy acrylate, a polyester acrylate, urethane acrylate, a reactive hyper-branched polymer having plural (meth)acryloyl groups in ends thereof [for example, trade names "CN2300", "CN2301" and "CN2320" (all of which are manufactured by SARTOMER), or the like], and so on.

Although a content of the polyfunctional monomer is not particularly limited, it is preferably 2 % by weight or less (for example, from 0.01 to 2 % by weight), and more preferably 1 % by weight or less (for example, from 0.02 to 1

% by weight), relative to a total amount of the monomer components constituting the acrylic polymer. When the content of the polyfunctional monomer exceeds 2 % by weight, there is a concern that flexibility of the pressure-sensitive adhesive layer is hindered, so that adhesiveness to an adherend with concaves and convexes, or the like deteriorates. Also, when the content of the polyfunctional monomer is less than 0.01 % by weight, there is a concern that cohesive force of the pressure-sensitive adhesive layer is poor, so that holding performance as a pressure-sensitive adhesive sheet deteriorates, or processability at the time of cutting or punching out the sheet, or the like deteriorates.

Examples of other copolymerizable monomer than the polar group-containing monomer or polyfunctional monomer include a vinyl ester, an aromatic vinyl compound, an olefin or a diene, a vinyl ether, an alkoxyalkyl (meth)acrylate based monomer, vinyl chloride, an alkoxyalkyl (meth)acrylate based monomer, a sulfonic acid group-containing monomer, a phosphate group-containing monomer, an imide group-containing monomer, a fluorine atom-containing (meth) acrylate, a silicon atom-containing (meth)acrylate, and so on. Examples of the vinyl ester include vinyl acetate, vinyl propionate, and so on. Examples of the aromatic vinyl compound include styrene, vinyltoluene, and so on. Examples of the olefin or the diene include ethylene, butadiene, isoprene, isobutylene, and so on. Examples of the vinyl ether include a vinyl alkyl ether and so on. Examples of the alkoxyalkyl (meth)acrylate based monomer include methoxyethyl (meth) acrylate, ethoxyethyl (meth)acrylate, and so on. Examples of the sulfonic acid group-containing monomer include sodium vinylsulfonate and so on. Examples of the phosphate-containing monomer include 2-hydroxyethylacryloyl phosphate and so on. Examples of the imide group-containing monomer include cyclohexylmaleimide, isopropylmaleimide and so on.

In the present invention, the base polymer (in particular, an acrylic polymer) of the pressure-sensitive adhesive layer is obtained by copolymerizing the foregoing monomer components. As a polymerization method, there can be adopted a conventionally known polymerization method such as solution polymerization, emulsion polymerization, or bulk polymerization. In the present invention, from the standpoint of workability, load to the environment or easiness of obtaining a thick pressure-sensitive adhesive layer, it is preferable to utilize a curing reaction with an active energy ray using a photopolymerization initiator (photoinitiator). Incidentally, the polymerization initiator can be used solely or in combination of two or more kinds thereof.

Although the photopolymerization initiator is not particularly limited, examples thereof include a ketal based photopolymerization initiator, an α-hydroxyketone based photopolymerization initiator, an α-aminoketone based photopolymerization initiator, an acylphosphine oxide based photopolymerization initiator, a benzoin ether based photopolymerization initiator, an acetophenone based photopolymerization initiator, an aromatic sulfonyl chloride based photopolymerization initiator, a photoactive oxime based photopolymerization initiator, a benzoin based photopolymerization initiator, a benzil based photopolymerization initiator, a benzophenone based photopolymerization initiator, a thioxanthone based photopolymerization initiator, and so on.

Examples of the ketal based photopolymerization initiator include 2,2-dimethoxy-1,2-diphenylethan-1-one (trade name "Irgacure 651", manufactured by Ciba Japan K.K.) and so on. Examples of the α-hydroxyketone based photopolymerization initiator include 1-hydroxy-cyclohexyl-phenyl ketone (trade name "Irgacure 184", manufactured by Ciba Japan K.K.), 2-hydroxy-2-methyl-1-phenyl-propan-1-one (trade name "Darocure 1173", manufactured by Ciba Japan K.K.), 1-[4-(2-hydroxyethoxy)-phenyl]-2-hydroxy-methyl-1-propan-1-one (trade name "Irgacure 2959", manufactured by Ciba Japan K.K.), and so on. Examples of the α-aminoketone based photopolymerization initiator include 2-methyl-1-[4-(methylthio)phenyl]-2-morpholinopropan-1-one (trade name "Irgacure 907", manufactured by Ciba Japan K.K.), 2-benzyl-2-dimethylamino-1-(4-morpholinophenyl)-butanone-1 (trade name "Irgacure 369", manufactured by Ciba Japan K.K.), and so on. Examples of the acylphosphine oxide based photopolymerization initiator include 2,4,6-trimethylbenzoyldiphenylphosphine oxide (trade name "Lucirin TPO", manufactured by BASF AG) and so on. Examples of the benzoin ether based photopolymerization initiator include benzoin methyl ether, benzoin ethyl ether, benzoin propyl ether, benzoin isopropyl ether, benzoin isobutyl ether, anisole methyl ether, and so on. Examples of the acetophenone based photopolymerization initiator include 2,2-diethoxyacetophenone, 2,2-dimethoxy-2-phenylacetophenone, 1-hydroxycyclohexyl phenyl ketone, 4-phenoxydichloroacetophenone, 4-(t-butyl)dichloroacetophenone, and so on. Examples of the aromatic sulfonyl chloride based photopolymerization initiator include 2-naphthalenesulfonyl chloride and so on. Examples of the photoactive oxime based photopolymerization initiator include 1-phenyl-1,1-propanedione-2-(o-ethoxycarbonyl)-oxime and so on. Examples of the benzoin based photopolymerization initiator include benzoin and so on. Examples of the benzil based photopolymerization initiator include benzil and so on. Examples of the benzophenone based photopolymerization initiator include benzophenone, benzoyl benzoate, 3,3'-dimethyl-4-methoxybenzophenone, polyvinylbenzophenone, α-hydroxycyclohexyl phenyl ketone, and so on. Examples of the thioxanthone based photopolymerization initiator include thioxanthone, 2-chlorothioxanthone, 2-methylthioxanthone, 2,4-dimethylthioxanthone, isopropylthioxanthone, 2,4-diisopropylthioxanthone, dodecylthioxanthone, and so on.

Although a use amount of such a photopolymerization initiator is not particularly limited, in the case of using an acrylic polymer as a base polymer of the pressure-sensitive adhesive layer, it is preferably from 0.001 to 0.5 parts by weight, and more preferably from 0.01 to 0.1 parts by weight based on 100 parts by weight of the whole of monomer components constituting the acrylic polymer.

As to activation of the photopolymerization initiator, it is important to irradiate an active energy ray. Examples

of such an active energy ray include an ionizing radiation such as an α-ray, a β-ray, a γ-ray, a neuron beam, or an electron beam; an ultraviolet ray; and so on. In particular, an ultraviolet ray is suitably used. Irradiation energy of an active energy ray or its irradiation time or the like is not particularly limited within a range where the reaction of the monomer components is not inhibited.

Also, in the present invention, at the time of obtaining the base polymer (in particular, an acrylic polymer) of the pressure-sensitive adhesive layer by copolymerizing the foregoing monomer components, a curing reaction with a thermally polymerization initiator may be adopted. Also, a curing reaction with the foregoing photopolymerization initiator may be adopted in combination. Examples of the thermally polymerization initiator include an azo based polymerization initiator [for example, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, 2,2'-azobis(N,N'-dimethyleneisobutylamidine) dihydrochloride or the like]; a redox based polymerization initiator; and so on. A use amount of the thermal polymerization initiator is not particularly limited and may be within a usable range as a polymerization initiator.

In view of handling, the pressure-sensitive adhesive composition may be adjusted so as to have a viscosity suitable for coating (in general, from 0.3 to 40 Pa·s in terms of a viscosity measured under a condition at a measurement temperature of 25 °C in the viscosity measurement using a B-type viscometer).

In the case of using a partial polymerization product of the monomer mixture as the pressure-sensitive adhesive composition, from the standpoint of obtaining the foregoing viscosity, a conversion of polymerization thereof is from about 2 to 40 % by weight, and preferably from about 5 to 20 % by weight though it varies depending upon a molecular weight of a portion where the partial polymerization occurs. Incidentally, the partial polymerization is in general performed by means of irradiation with an active energy ray (in particular, an ultraviolet ray) while avoiding contact with oxygen.

The conversion of polymerization of the partial polymerization product is calculated by precisely weighing about 0.5 g of the partial polymerization product, further precisely weighing a weight thereof after drying this at 130 °C for 2 hours to determine a decrease in weight [volatile matter content (weight of unreacted monomer)], and substituting the obtained numerical value in the following expression.

$$\text{Conversion of polymerization (\%) of partial polymerization product} = [1 - (\text{Decrease in weight})/(\text{Weight of partial polymerization product before drying})] \times 100$$

Also, the viscosity of the pressure-sensitive adhesive composition may be adjusted by properly blending a thickening polymer. Examples of such a thickening polymer include an acrylic polymer obtained by copolymerizing the foregoing (meth)acrylic alkyl ester with acrylic acid, acrylamide, acrylonitrile, acryloylmorpholine, or the like; a styrene-butadiene rubber (SBR); an isoprene rubber; a styrene butadiene block copolymer (SBS); an ethylene/vinyl acetate copolymer; an acrylic rubber; polyurethane; a polyester; and so on. Incidentally, the thickening polymer can be used solely or in combination of two or more kinds thereof.

The pressure-sensitive adhesive composition forming the pressure-sensitive adhesive layer may contain a proper additive depending upon an application of the pressure-sensitive adhesive layer. Examples of such an additive include a crosslinking agent (for example, a polyisocyanate based crosslinking agent, a silicone based crosslinking agent, an epoxy based crosslinking agent, an alkyl-etherified melamine based crosslinking agent, or the like); a tackifier (for example, a tackifier that is solid, semisolid or liquid at ordinary temperature and which comprises a rosin derivative resin, a polyterpene resin, a petroleum resin, an oil-soluble phenol resin, or the like); a plasticizers; a filler; an anti-aging agent; a colorant (a pigment, a dye, or the like); and so on. For example, in the case of adopting a photopolymerization method at the time of forming a base polymer, a pigment (coloring pigment) can be used for coloration to the extent such that the photopolymerization is not inhibited. In the case of coloring the pressure-sensitive adhesive layer black, for example, carbon black can be used. From the viewpoint of a degree of coloration or not inhibiting the photopolymerization reaction, for example, a use amount of the carbon black as a coloring pigment is preferably 0.15 parts by weight or less (for example, from 0.001 to 0.15 parts by weight), and more preferably from 0.02 to 0.1 parts by weight based on 100 parts by weight of the whole of monomers constituting the base polymer of the pressure-sensitive adhesive layer [in particular, the whole of monomer components constituting the acrylic polymer composed mainly of the alkyl (meth)acrylate].

Although the formation of the pressure-sensitive adhesive layer is not particularly limited, for example, it is formed by coating the pressure-sensitive adhesive composition on a release linear or an appropriate support such as a base material to form a coating layer, and further subjecting the subject coating layer to curing (for example, curing with heat, curing with an active energy ray, or the like), drying, or the like as the need arises. Incidentally, at the time of performing curing (photocuring) with an active energy ray, since the photopolymerization reaction is inhibited by oxygen in air, it is preferable to block oxygen by means of sticking a release liner (separator) or the like onto the subject coating layer, performing the photocuring in a nitrogen atmosphere, or the like. Incidentally, the release liner (separator) or the like used at the time of forming the pressure-sensitive adhesive layer, or the like may be peeled off at a suitable stage at the time of fabricating the heat-releasable pressure-sensitive adhesive sheet of the present invention, or may be peeled off at the time of utilizing the heat-releasable pressure-sensitive adhesive sheet after the fabrication.

In the pressure-sensitive adhesive layer, from the standpoint of elasticity, flexibility or holding characteristic, a gel fraction (solvent-insoluble matter content) is preferably from 10 to 90 % by weight, and more preferably from 20 to 85 % by weight. When the gel fraction is less than 10 % by weight, there may be the case where a desired holding characteristic is not achieved; whereas when it exceeds 90 % by weight, it is difficult to take balance between elasticity and flexibility.

The gel fraction of the pressure-sensitive adhesive layer is determined in the following manner. First of all, a porous polytetrafluoroethylene film (trade name "Nitoflon (registered trademark) NTF-1122", manufactured by Nitto Denko Corporation, thickness: 85 um) is cut out into a size of 100 mm x 100 mm; a kite string (thickness: 1.5 mm) is cut into a length of about 100 mm; and weights thereof are measured (the weight of the porous polytetrafluoroethylene film and kite string is defined as a "weight (A)"). Subsequently, a prescribed amount (about 1 g) of the pressure-sensitive adhesive layer is enclosed with the porous polytetrafluoroethylene film, and an enclosed opening is tied using the kite string, thereby fabricating a package having the pressure-sensitive adhesive layer enclosed therein (sometimes referred to as a "pressure-sensitive adhesive layer-containing package"). A weight of this pressure-sensitive adhesive layer-containing package is measured, and the weight (A) of the porous polytetrafluoroethylene film and kite string is subtracted from the weight of the pressure-sensitive adhesive layer-containing package, thereby determining a weight of the pressure-sensitive adhesive layer. Incidentally, the weight of the pressure-sensitive adhesive layer is defined as a weight (B). Subsequently, the pressure-sensitive adhesive layer-containing package is immersed in 45 mL of ethyl acetate at room temperature (for example, 23 °C) for 7 days, and only a sol component in the pressure-sensitive adhesive layer is allowed to be eluted out of the porous polytetrafluoroethylene film. Then, after the immersion, the heat-releasable pressure-sensitive adhesive layer-containing package having been immersed in ethyl acetate for 7 days is taken out, and the ethyl acetate attached onto the porous polytetrafluoroethylene film is wiped off and dried with a dryer at 130 °C for 2 hours. After drying, a weight of the pressure-sensitive adhesive layer-containing package is measured. The weight of this pressure-sensitive adhesive layer-containing package is defined as a weight (C).

Then, the gel fraction (% by weight) of the pressure-sensitive adhesive layer is calculated according to the following expression.

$$\text{Gel fraction (\% by weight)} = [(C - A)/B \times 100]$$

Although a thickness of the pressure-sensitive adhesive layer is not particularly limited, for example, it is preferably from 3 to 200 um, preferably from 4 to 150 μm, and more preferably from 5 to 100 μm. When the thickness of the pressure-sensitive adhesive layer is smaller than 3 μm, there may be the case where cushioning properties are lowered, so that adhesiveness to a curved surface or a concave and convex surface deteriorates; whereas when it is larger than 200 μm, a layer or sheet having a uniform thickness is hardly obtained. Incidentally, the pressure-sensitive adhesive layer may have any of a single-layered form or a plural-layered form.

(Release liner)

The pressure-sensitive adhesive layer surface or heat-releasable pressure-sensitive adhesive layer surface of the heat-releasable pressure-sensitive adhesive sheet of the present invention may be protected by a release liner (separator or release film) until being used. Also, the pressure-sensitive adhesive surfaces may be protected by two release liners, respectively, or may be protected by a single release liner, the both surfaces of which are a release surface, in a wound form in a roll shape. The release liner is used as a protective material of the heat-releasable pressure-sensitive adhesive layer and is peeled off at the time of being stuck to an adherend.

As such a release liner, a customary release paper or the like can be used, and the release liner is not particularly limited. However, for example, a base material having a release treated layer, a low adhesive base material composed

of a fluorine based polymer, a low adhesive base material composed of a non-polar polymer, or the like can be used. Examples of the low adhesive base material composed of a fluorine based polymer include a plastic film or paper having been surface treated with a release treating agent such as a silicone based, long chain alkyl based, or fluorine based or molybdenum sulfide release treating agent; and so on. Examples of the fluorine based polymer of the low adhesive base material composed of a fluorine based polymer include polytetrafluoroethylene, polychlorotrifluoroethylene, polyvinyl fluoride, polyvinylidene fluoride, a tetrafluoroethylene/hexafluoropropylene copolymer, a chlorofluoroethylene/vinylidene fluoride copolymer, and so on. Examples of the non-polar polymer of the low adhesive base material composed of a non-polar polymer include an olefin based resin (for example, polyethylene, polypropylene or the like) and so on. Incidentally, the release liner can be formed by a known or customary method. Also, a thickness or the like of the release liner is not particularly limited. Incidentally, the following (base material) is not included in the release liner.

(Base material)

In the case where the heat-releasable pressure-sensitive adhesive sheet of the present invention has a base material, the subject base material is not particularly limited. For example, proper thin leaf bodies including a paper based base material such as paper; a fiber based base material such as a fabric, a nonwoven fabric, or a net; a metal based base material such as a metal foil or a metal plate; a plastic based base material such as a film or sheet made of a resin of every kind (an olefin based resin, a polyester based resin, a polyvinyl chloride based resin, a vinyl acetate based resin, an amide based resin, a polyimide based resin, polyetheretherketone (PEEK), polyphenylene sulfide (PPS), or the like); a rubber based base material such as a rubber sheet; a foamed material such as a foamed sheet; a laminate thereof (in particular, a laminate of a plastic based base material and other base material, a laminate of plastic films (or sheets) each other, or the like); and so on can be used.

A thickness of the foregoing base material is not particularly limited, and for example, it is preferably from 10 to 500 μm, more preferably from 12 to 200 μm, and still more preferably from 15 to 100 μm. Incidentally, the base material may have a single-layered form, or may have a plural-layered form. Also, the base material may be subjected to a treatment of every kind such as a back surface treatment, an antistatic treatment, or an undercoating treatment, as the need arises.

(Other layers)

The heat-releasable pressure-sensitive adhesive sheet of the present invention may have other layers, for example, an interlayer, an undercoat layer or the like, within a range where the effect of the invention is not inhibited. More specifically, examples thereof include a coating layer of a release agent aiming to impart peelability, a coating layer of an undercoating agent aiming to enhance an adhesion force, a layer aiming to impart good deformability, a layer aiming to increase an adhesive area to an adherend, a layer aiming to enhance an adhesive force to an adherend, a layer aiming to allow the sheet to satisfactorily follow a surface shape of an adherend, a layer aiming to enhance processability of a decrease of adhesive force by heating, a layer aiming to enhance peelability after heating, and so on. Also, the sheet may have a known or customary pressure-sensitive adhesive layer other than the foregoing pressure-sensitive adhesive layer or heat-releasable pressure-sensitive adhesive layer.

(Manufacturing method of heat-releasable pressure-sensitive adhesive sheet)

Although a method of fabricating the heat-releasable pressure-sensitive adhesive sheet is not particularly limited, examples thereof include a method of achieving the fabrication through a step of preparing an acrylic pressure-sensitive adhesive composition for forming a heat-releasable pressure-sensitive adhesive layer by using a monomer mixture and a step of forming a heat-releasable pressure-sensitive adhesive layer on at least one surface of a suitable support (for example, a base material, a release liner or the like) or a pressure-sensitive adhesive layer by the acrylic pressure-sensitive adhesive composition prepared in the preceding step.

In the step of preparing an acrylic pressure-sensitive adhesive composition for forming a heat-releasable pressure-sensitive adhesive layer by using a monomer mixture, though there is no particular limitation, for example, the acrylic pressure-sensitive adhesive composition is prepared from the monomer mixture by obtaining a composition containing an acrylic copolymer from the monomer mixture and blending the subject composition with a thermal foaming agent and an additive as the need arises; obtaining a composition containing the monomer mixture and its partial polymerization product from the monomer mixture by adding a polymerization initiator to the monomer mixture to achieve polymerization or other means and blending the subject composition with a thermal foaming agent and an additive as the need arises; or the like.

In the step of forming a heat-releasable pressure-sensitive adhesive layer on at least one surface of a suitable support (for example, a base material, a release liner or the like) or a pressure-sensitive adhesive layer, for example,

the heat-releasable pressure-sensitive adhesive layer is formed by: coating an acrylic pressure-sensitive adhesive composition on at least one surface of a suitable support (for example, a base material, a release liner or the like) or a pressure-sensitive adhesive layer to form a coating layer and then performing heating, drying, irradiation with an active energy ray, or other means as the need arises, thereby forming a heat-releasable pressure-sensitive adhesive layer; transferring a separately fabricated heat-releasable pressure-sensitive adhesive layer onto at least one surface of a suitable support (for example, the foregoing release liner or the like), thereby forming a heat-releasable pressure-sensitive adhesive layer; or other means.

Also, in the case of obtaining an acrylic copolymer by means of a photopolymerization method, for example, there can be adopted a method of forming a heat-releasable pressure-sensitive adhesive sheet having a heat-releasable pressure-sensitive adhesive layer on at least one surface of a pressure-sensitive adhesive layer through the following steps (i) to (ii). Adoption of such a method is effective from the standpoint that the pressure-sensitive adhesive layer (for example, an acrylic pressure-sensitive adhesive layer or the like) and the heat-releasable pressure-sensitive adhesive layer can be fabricated at the same time, thereby enabling a sticking step to be simplified.

Step (i): Step of preparing an acrylic pressure-sensitive adhesive composition from: a monomer mixture containing a monomer (m1) and a monomer (m2), with a content of the monomer (m1) being from 40 to 97.5 % by weight and a content of the monomer (m2) being from 0.5 to 20 % by weight relative to the whole of monomer components; from 0.01 to 2 parts by weight of a photopolymerization initiator based on 100 parts by weight of the monomer components in the monomer mixture; and a thermal foaming agent.

Step (ii): Step of forming a heat-releasable pressure-sensitive adhesive layer on at least one surface of a pressure-sensitive adhesive layer by using the acrylic pressure-sensitive adhesive composition prepared in the step (i).

(Heat-releasable pressure-sensitive adhesive sheet)

The heat-releasable pressure-sensitive adhesive sheet of the present invention has at least the heat-releasable pressure-sensitive adhesive layer. For that reason, it exhibits excellent repelling resistance, and also exhibits easy peelability after the heat treatment while exhibiting good adhesiveness to a variety of adherends such as a coating film, a metal, or a plastic, on the pressure-sensitive adhesive surface provided by the heat-releasable pressure-sensitive adhesive layer.

In the light of the above, the heat-releasable pressure-sensitive adhesive sheet of the present invention has excellent balance in various characteristics of repelling resistance, adhesiveness and heat peelability. Also, the sheet has good adhesion reliability to a variety of adherends and when peeled off and disassembled or removed from an adherend at the time of completing the use purpose or at the time of recycling or the like, it can be easily peeled off and disassembled or removed.

Incidentally, in this application, it is meant by the terms "can be removed" that a member fixed by the pressure-sensitive adhesive surface can be peeled off from the pressure-sensitive adhesive surface without adhesive deposit or breakage of the member.

In the case where the heat-releasable pressure-sensitive adhesive sheet of the present invention has a constitution having a heat-releasable pressure-sensitive adhesive layer on at least one surface of a pressure-sensitive adhesive layer, a formulation of the pressure-sensitive adhesive composition for forming the pressure-sensitive adhesive layer and a formulation of the acrylic pressure-sensitive adhesive composition for forming the heat-releasable pressure-sensitive adhesive layer may be the same as each other, except for the matter that the thermal foaming agent is contained, may be approximated with each other, or may be different from each other. Incidentally, when the formulations are the same as or approximated with each other, it is advantageous from the standpoint of workability at the time of fabricating the heat-releasable pressure-sensitive adhesive sheet. Also, at the time of heat peeling, adhesiveness between the pressure-sensitive adhesive layer and the heat-releasable layer is excellent so that the sheet is more easily removed from the adherend.

In the case where the heat-releasable pressure-sensitive adhesive sheet of the present invention has a constitution having a heat-releasable pressure-sensitive adhesive layer on at least one surface of a pressure-sensitive adhesive layer, a total thickness of the pressure-sensitive adhesive layer and the heat-releasable pressure-sensitive adhesive layer is preferably from 6 to 400 μm, and preferably from 10 to 200 μm, from the standpoint of balance among adhesion reliability to an adherend, absorbability of concaves and convexes relative to the adherend surface and peelability from an adherend by means of the heat treatment. Incidentally, for example, in the case where the heat-releasable pressure-sensitive adhesive sheet of the present invention is one having a heat-releasable pressure-sensitive adhesive layer on one surface of a pressure-sensitive adhesive layer, the total thickness of the pressure-sensitive adhesive layer and the heat-releasable pressure-sensitive adhesive layer is corresponding to a thickness of from the pressure-sensitive adhesive layer surface to the heat-releasable pressure-sensitive adhesive layer surface; and in the case where the heat-releasable pressure-sensitive adhesive sheet of the present invention is one having a heat-releasable pressure-sensitive

adhesive layer on the both surfaces of a pressure-sensitive adhesive layer, the total thickness is corresponding to a thickness of from the one heat-releasable pressure-sensitive adhesive layer surface to the other heat-releasable pressure-sensitive adhesive layer surface.

In the case where the heat-releasable pressure-sensitive adhesive sheet of the present invention has a constitution having a heat-releasable pressure-sensitive adhesive layer on at least one surface of a pressure-sensitive adhesive layer, when a member (part) is stuck onto the pressure-sensitive adhesive layer side, the pressure-sensitive adhesive layer can be left on the subject member (part) by means of a heat treatment; and when a member (part) is stuck onto the heat-releasable pressure-sensitive adhesive layer side, the pressure-sensitive adhesive layer per se can be completely taken away from the subject member (part) by means of a heat treatment.

The heat-releasable pressure-sensitive adhesive sheet of the present invention can be suitably used for applications such as a manufacturing and processing process of metal products, a manufacturing and processing process of ceramic products, a manufacturing process of household electrical appliances in which a resin and a metal (for example, "polycarbonate and stainless steel (SUS)", "ABS and aluminum" or the like) are combined, or disassembling after recovery and recycling.

In particular, the heat-releasable pressure-sensitive adhesive sheet of the present invention is effective in the case where the adherend has a curved surface because the sheet has excellent repelling resistance. For example, it is suitable for an application in which the repelling resistance is important, for example, an application in sticking the heat-releasable pressure-sensitive adhesive sheet to a rounded SUS or ABS adherent, or the like.

## EXAMPLES

The present invention is hereunder described in more detail on the basis of the Examples, but it should not be construed that the invention is limited to these Examples at all.

### (Example 1)

[Preparation of partially polymerized composition (monomer syrup)]

With 100 parts by weight of a composition consisting of 70 parts by weight of 2-ethylhexyl acrylate (2EHA), 26 parts by weight ofN-vinyl-2-pyrrolidone (NVP) and 4 parts by weight of N-(2-hydroxyethyl) acrylamide (HEAA), there were blended, as photopolymerization initiators, 0.05 parts by weight of 2,2-dimethoxy-1,2-diphenylethan-1-one (trade name "Irgacure 65 1 ", manufactured by Ciba Japan K.K.) and 0.05 parts by weight of 1-hydroxy-cyclohexyl-phenyl ketone (trade name "Irgacure 184", manufactured by Ciba Japan K.K.), and the mixture was thoroughly purged with a nitrogen gas and irradiated with an ultraviolet ray, thereby obtaining a partially polymerized composition (monomer syrup) having a conversion of polymerization of about 11 % by weight.

[Fabrication of heat-releasable pressure-sensitive adhesive layer]

To 100 parts by weight of the foregoing partially polymerized composition, there were added 30 parts by weight of a heat-expandable microcapsule (trade name "EXPANCEL-461DU40", manufactured by Azko Nobel Surface Chemistry AB); 0.2 parts by weight (on a solids basis) of a reaction product of trimethylolpropane and tolylene diisocyanate (trade name "Coronate L", manufactured by Nippon Polyurethane Industry Co., Ltd., C/L) and 0.1 parts by weight of 1,6-hexanediol diacrylate (HDDA) as internal crosslinking agents; and 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.) as photopolymerization initiators to thereby obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer.
Subsequently, a release liner (polyester film, one surface of which had been release treated with a silicone based release agent; trade name "MRN38", manufactured by Mitsubishi Chemical Polyester Film Co., Ltd., thickness: 38 μm) was stuck onto the subject coating layer in a form such that the release treated surface came into contact with the coating layer, followed by irradiation with an ultraviolet ray under a condition at an illuminance of 4 $mW/cm^2$ and a quantity of light of 720 $mJ/cm^2$, thereby obtaining a heat-releasable pressure-sensitive adhesive layer sheet of release liner/heat-releasable pressure-sensitive adhesive layer (thickness: 75 μm)/release liner.
A gel fraction of the subject heat-releasable pressure-sensitive adhesive layer was 92.3 % by weight.

[Fabrication of pressure-sensitive adhesive layer]

To 100 parts by weight of the foregoing partially polymerized composition, there were added 0.1 parts by weight (on a solids basis) of a reaction product of trimethylolpropane and tolylene diisocyanate (trade name "Coronate L", manufactured by Nippon Polyurethane Industry Co., Ltd., C/L) and 0.02 parts by weight of 1,6-hexanediol diacrylate (HDDA) as internal crosslinking agents; and 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.) as photopolymerization initiators to thereby obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer.
Subsequently, a release liner (polyester film, one surface of which had been release treated with a silicone based release agent; trade name "MRN38", manufactured by Mitsubishi Chemical Polyester Film Co., Ltd., thickness: 38 μm) was stuck onto the subject coating layer in a form such that the release treated surface came into contact with the coating layer, followed by irradiation with an ultraviolet ray under a condition at an illuminance of 4 $mW/cm^2$ and a quantity of light of 720 $mJ/cm^2$, thereby obtaining a pressure-sensitive adhesive layer sheet of release liner/pressure-sensitive adhesive layer (thickness: 20 μm)/release liner.
A gel fraction of the subject pressure-sensitive adhesive layer was 78.1 % by weight.

[Fabrication of pressure-sensitive adhesive sheet]

One of the release liners of the pressure-sensitive adhesive layer sheet was peeled off to expose the pressure-sensitive adhesive layer, and furthermore, one of the release liners of the heat-releasable pressure-sensitive adhesive layer sheet was peeled off to expose the heat-releasable pressure-sensitive adhesive layer. Thereafter, the pressure-sensitive adhesive layer sheet and the heat-releasable pressure-sensitive adhesive layer sheet were stuck to each other in a form such that the pressure-sensitive adhesive layer and the heat-releasable pressure-sensitive adhesive layer came into contact with each other, thereby fabricating a pressure-sensitive adhesive sheet (total thickness of the pressure-sensitive adhesive layers: 95 μm).

(Example 2)

[Fabrication of heat-releasable pressure-sensitive adhesive layer]

With 100 parts by weight of a composition consisting of 70 parts by weight of 2-ethylhexyl acrylate (2EHA), 26 parts by weight of N-vinyl-2-pyrrolidone (NVP) and 4 parts by weight of N-(hydroxymethyl) acrylamide (HMAA), there were blended, as photopolymerization initiators, 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.), and the mixture was thoroughly purged with a nitrogen gas and irradiated with an ultraviolet ray, thereby obtaining a partially polymerized composition (monomer syrup) having a conversion of polymerization of about 10 % by weight.
To 100 parts by weight of the foregoing partially polymerized composition, there were added 30 parts by weight of a heat-expandable microcapsule (trade name "EXPANCEL-461 DU40", manufactured by Azko Nobel Surface Chemistry AB); 0.2 parts by weight (on a solids basis) of a reaction product of trimethylolpropane and tolylene diisocyanate (trade name "Coronate L", manufactured by Nippon Polyurethane Industry Co., Ltd., C/L) and 0.1 parts by weight of 1,6-hexanediol diacrylate (HDDA) as internal crosslinking agents; and 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.) as photopolymerization initiators to thereby obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer.
Subsequently, a release liner (polyester film, one surface of which had been release treated with a silicone based release agent; trade name "MRN38", manufactured by Mitsubishi Chemical Polyester Film Co., Ltd., thickness: 38 μm) was stuck onto the subject coating layer in a form such that the release treated surface came into contact with the coating layer, followed by irradiation with an ultraviolet ray under a condition at an illuminance of 4 $mW/cm^2$ and a quantity of light of 720 $mJ/cm^2$, thereby obtaining a heat-releasable pressure-sensitive adhesive layer sheet of release liner/heat-releasable pressure-sensitive adhesive layer (thickness: 75 μm)/release liner.
A gel fraction of the subject heat-releasable pressure-sensitive adhesive layer was 93.5 % by weight.

[Fabrication of pressure-sensitive adhesive layer]

With 100 parts by weight of a composition consisting of 90 parts by weight of 2-ethylhexyl acrylate (2EHA) and 10 parts by weight of acrylic acid (AA), there were blended, as photopolymerization initiators, 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.), and the mixture was thoroughly purged with a nitrogen gas and irradiated with an ultraviolet ray, thereby obtaining a partially polymerized composition (monomer syrup) having a conversion of polymerization of about 10 % by weight.
To 100 parts by weight of the foregoing partially polymerized composition, there was added 0.04 parts by weight of 1,6-hexanediol diacrylate (HDDA) to thereby obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer.
Subsequently, a release liner (polyester film, one surface of which had been release treated with a silicone based release agent; trade name "MRN38", manufactured by Mitsubishi Chemical Polyester Film Co., Ltd., thickness: 38 μm) was stuck onto the subject coating layer in a form such that the release treated surface came into contact with the coating layer, followed by irradiation with an ultraviolet ray under a condition at an illuminance of 4 $mW/cm^2$ and a quantity of light of 720 $mJ/cm^2$, thereby obtaining a pressure-sensitive adhesive layer sheet of release liner/pressure-sensitive adhesive layer (thickness: 20 μm)/release liner.
A gel fraction of the subject pressure-sensitive adhesive layer was 60.2 % by weight.

[Fabrication of pressure-sensitive adhesive sheet]

One of the release liners of the pressure-sensitive adhesive layer sheet was peeled off to expose the pressure-sensitive adhesive layer, and furthermore, one of the release liners of the heat-releasable pressure-sensitive adhesive layer sheet was peeled off to expose the heat-releasable pressure-sensitive adhesive layer. Thereafter, the pressure-sensitive adhesive layer sheet and the heat-releasable pressure-sensitive adhesive layer sheet were stuck to each other in a form such that the pressure-sensitive adhesive layer and the heat-releasable pressure-sensitive adhesive layer came into contact with each other, thereby fabricating a pressure-sensitive adhesive sheet (total thickness of the pressure-sensitive adhesive layers: 95 μm).

(Example 3)

[Fabrication of heat-releasable pressure-sensitive adhesive layer]

With 100 parts by weight of a composition consisting of 71 parts by weight of 2-ethylhexyl acrylate (2EHA), 15 parts by weight of N-vinyl-2-pyrrolidone (NVP), 11 parts by weight of N,N-diethyl acrylamide (DEAA), 1.5 parts by weight of N-(2-hydroxyethyl) acrylamide (HEAA) and 1.5 parts by weight of N-(hydroxymethyl) acrylamide (HMAA), there were blended, as photopolymerization initiators, 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.), and the mixture was thoroughly purged with a nitrogen gas and irradiated with an ultraviolet ray, thereby obtaining a partially polymerized composition (monomer syrup) having a conversion of polymerization of about 10 % by weight.
To 100 parts by weight of the foregoing partially polymerized composition, there were added 30 parts by weight of a heat-expandable microcapsule (trade name "EXPANCEL-461DU40", manufactured by Azko Nobel Surface Chemistry AB); 0.2 parts by weight (on a solids basis) of a reaction product of trimethylolpropane and tolylene diisocyanate (trade name "Coronate L", manufactured by Nippon Polyurethane Industry Co., Ltd., C/L) and 0.1 parts by weight of 1,6-hexanediol diacrylate (HDDA) as internal crosslinking agents; and 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.) as photopolymerization initiators to thereby obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer.
Subsequently, a release liner (polyester film, one surface of which had been release treated with a silicone based release agent; trade name "MRN38", manufactured by Mitsubishi Chemical Polyester Film Co., Ltd., thickness: 38 μm) was stuck onto the subject coating layer in a form such that the release treated surface came into contact with the coating layer, followed by irradiation with an ultraviolet ray under a condition at an illuminance of 4 $mW/cm^2$ and a quantity of light of 720 $mJ/cm^2$, thereby obtaining a heat-releasable pressure-sensitive adhesive layer sheet of release liner/heat-releasable pressure-sensitive adhesive layer (thickness: 75 μm)/release liner.
A gel fraction of the subject heat-releasable pressure-sensitive adhesive layer was 90.8 % by weight.

[Fabrication of pressure-sensitive adhesive layer]

With 100 parts by weight of a composition consisting of 90 parts by weight of 2-ethylhexyl acrylate (2EHA) and 10 parts by weight of acrylic acid (AA), there were blended, as photopolymerization initiators, 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.), and the mixture was thoroughly purged with a nitrogen gas and irradiated with an ultraviolet ray, thereby obtaining a partially polymerized composition (monomer syrup) having a conversion of polymerization of about 11 % by weight.
To 100 parts by weight of the foregoing partially polymerized composition, there were added 0.04 parts by weight of 1,6-hexanediol diacrylate (HDDA) to obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer.
Subsequently, a release liner (polyester film, one surface of which had been release treated with a silicone based release agent; trade name "MRN38", manufactured by Mitsubishi Chemical Polyester Film Co., Ltd., thickness: 38 μm) was stuck onto the subject coating layer in a form such that the release treated surface came into contact with the coating layer, followed by irradiation with an ultraviolet ray under a condition at an illuminance of 4 $mW/cm^2$ and a quantity of light of 720 $mJ/cm^2$, thereby obtaining a pressure-sensitive adhesive layer sheet of release liner/pressure-sensitive adhesive layer (thickness: 20 μm)/release liner.
A gel fraction of the subject pressure-sensitive adhesive layer was 60.2 % by weight.

[Fabrication of pressure-sensitive adhesive sheet]

One of the release liners of the pressure-sensitive adhesive layer sheet was peeled off to expose the pressure-sensitive adhesive layer, and furthermore, one of the release liners of the heat-releasable pressure-sensitive adhesive layer sheet was peeled off to expose the heat-releasable pressure-sensitive adhesive layer. Thereafter, the pressure-sensitive adhesive layer sheet and the heat-releasable pressure-sensitive adhesive layer sheet were stuck to each other in a form such that the pressure-sensitive adhesive layer and the heat-releasable pressure-sensitive adhesive layer came into contact with each other, thereby fabricating a pressure-sensitive adhesive sheet (total thickness of the pressure-sensitive adhesive layers: 95 μm).

(Example 4)

[Fabrication of heat-releasable pressure-sensitive adhesive layer]

In a reaction vessel equipped with a cooling tube, a nitrogen gas introducing tube, a thermometer, a dropping funnel and a stirring blade, 0.1 parts by weight of 2,2-azobisisobutyronitrile (AIBN) as a polymerization initiator, 90 parts by weight of n-butyl acrylate (BA) as a monomer component and 82 parts by weight of ethyl acetate as a solvent were added, and the contents of the reaction vessel (solution containing a total amount of the monomer component) were subjected to temperature increase to 60 °C while purging with nitrogen. Thereafter, polymerization was performed while adding dropwise 0.2 parts by weight of 2,2-azobisisobutyronitrile (AIBN) as a polymerization initiator, 5 parts by weight of N-(2-hydroxyethyl) acrylamide (HEAA), 5 parts by weight ofN-(hydroxymethyl) acrylamide (HMAA) and 81 parts by weight of ethyl acetate as a solvent over 3 hours. There was obtained an acrylic polymer solution by means of such solution polymerization of a continuous charge system.
To the obtained acrylic polymer solution, 30 parts by weight of a heat-expandable microcapsule (trade name "EXPANCEL-461 DU40", manufactured by Azko Nobel Surface Chemistry AB) and 0.07 parts by weight (in a solids content conversion) of an isocyanate based crosslinking agent (a reaction product of trimethylolpropane and tolylene diisocyanate; trade name "Coronate L", manufactured by Nippon Polyurethane Industry Co., Ltd., C/L) were added to obtain a composition. The subject composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer, followed by drying at 70 °C for 5 minutes to obtain a heat-releasable pressure-sensitive adhesive layer sheet of release liner/heat-releasable pressure-sensitive adhesive layer (thickness: 75 μm).
A gel fraction of the subject heat-releasable pressure-sensitive adhesive layer was 57.5 % by weight.

[Fabrication of pressure-sensitive adhesive layer]

To 100 parts by weight of a [2-ethylhexyl acrylate (2EHA)/acrylic acid (AA)] copolymer, there was added 2 parts by weight (on a solids basis) of a reaction product of trimethylolpropane and tolylene diisocyanate (trade name "Coronate L", manufactured by Nippon Polyurethane Industry Co., Ltd., C/L) as an internal crosslinking agent to thereby obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer, followed by drying at 100 °C for 2 minutes to obtain a pressure-sensitive adhesive layer sheet of release liner/pressure-sensitive adhesive layer (thickness: 20 μm).
A gel fraction of the subject pressure-sensitive adhesive layer was 50.8 % by weight.

[Fabrication of pressure-sensitive adhesive sheet]

The pressure-sensitive adhesive layer sheet and the heat-releasable pressure-sensitive adhesive layer sheet were stuck to each other in a form such that the pressure-sensitive adhesive layer and the heat-releasable pressure-sensitive adhesive layer came into contact with each other, thereby fabricating a pressure-sensitive adhesive sheet (total thickness of the pressure-sensitive adhesive layers: 95 μm).

(Example 5)

With 100 parts by weight of a composition consisting of 71 parts by weight of 2-ethylhexyl acrylate (2EHA), 15 parts by weight of N-vinyl-2-pyrrolidone (NVP), 11 parts by weight of N,N-diethyl acrylamide (DEAA), 1.5 parts by weight of N-(2-hydroxyethyl) acrylamide (HEAA) and 1.5 parts by weight ofN-(hydroxymethyl) acrylamide (HMAA), there were blended, as photopolymerization initiators, 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.), and the mixture was thoroughly purged with a nitrogen gas and irradiated with an ultraviolet ray, thereby obtaining a partially polymerized composition (monomer syrup) having a conversion of polymerization of about 10 % by weight.
To 100 parts by weight of the foregoing partially polymerized composition, there were added 20 parts by weight of a heat-expandable microcapsule (trade name "EXPANCEL-461DU40", manufactured by Azko Nobel Surface Chemistry AB); 10 parts by weight of a heat-expandable microcapsule (trade name "Matsumoto Microsphere F-50DFU", manufactured by Matsumoto Yushi-Seiyaku Co., Ltd.); 0.2 parts by weight (on a solids basis) of a reaction product of trimethylolpropane and tolylene diisocyanate (trade name "Coronate L", manufactured by Nippon Polyurethane Industry Co., Ltd., C/L) and 0.1 parts by weight of 1,6-hexanediol diacrylate (HDDA) as internal crosslinking agents; and 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.) as photopolymerization initiators, to thereby obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer.
Subsequently, a release liner (polyester film, one surface of which had been release treated with a silicone based release agent; trade name "MRN38", manufactured by Mitsubishi Chemical Polyester Film Co., Ltd., thickness: 38 μm) was stuck onto the subject coating layer in a form such that the release treated surface came into contact with the coating layer, followed by irradiation with an ultraviolet ray under a condition at an illuminance of 4 $mW/cm^2$ and a quantity of light of 720 $mJ/cm^2$, thereby obtaining a pressure-sensitive adhesive sheet of release liner/heat-releasable pressure-sensitive adhesive layer (thickness: 75 μm)/release liner.
A gel fraction of the subject heat-releasable pressure-sensitive adhesive layer was 86.9 % by weight.

(Comparative Example 1)

A partially polymerized composition (monomer syrup) having a conversion of polymerization of about 11 % by weight was obtained in the same manner as that in Example 1, except for using 100 parts by weight of a composition consisting of 90 parts by weight of 2-ethylhexyl acrylate (2EHA) and 10 parts by weight of acrylic acid (acrylic acid).
A heat-releasable pressure-sensitive adhesive layer sheet of release liner/heat-releasable pressure-sensitive adhesive layer/release liner was obtained in the same manner as that in Example 1, except for using the foregoing partially polymerized composition as the partially polymerized composition and using 0.4 parts by weight (on a solids basis) of a reaction product of trimethylolpropane and tolylene diisocyanate (trade name "Coronate L", manufactured by Nippon

Polyurethane Industry Co., Ltd., C/L) and 0.3 parts by weight of 1,6-hexanediol diacrylate (HDDA) as the internal crosslinking agents. Incidentally, a gel fraction of the subject heat-releasable pressure-sensitive adhesive layer was 90.3 % by weight.

A pressure-sensitive adhesive layer sheet of release liner/pressure-sensitive adhesive layer/release liner was obtained in the same manner as that in Example 1, except for using the foregoing partially polymerized composition as the partially polymerized composition and using 0.3 parts by weight (on a solids basis) of a reaction product of trimethylolpropane and tolylene diisocyanate (trade name "Coronate L", manufactured by Nippon Polyurethane Industry Co., Ltd., C/L) and 0.08 parts by weight of 1,6-hexanediol diacrylate (HDDA) as the internal crosslinking agents. Incidentally, a gel fraction of the subject pressure-sensitive adhesive layer was 80 % by weight.

Then, a pressure-sensitive adhesive sheet (total thickness of the pressure-sensitive adhesive layers: 95 μm) was fabricated in the same manner as that in Example 1.

(Comparative Example 2)

[Fabrication of heat-releasable pressure-sensitive adhesive layer]

To 100 parts by weight of a copolymer formed from 85 parts by weight of n-butyl acrylate (BA), 15 parts by weight of acrylonitrile (AN) and 1.5 parts by weight of acrylic acid (AA), there were added 30 parts by weight of a heat-expandable microcapsule (trade name "EXPANCEL-461 DU40", manufactured by Azko Nobel Surface Chemistry AB) and 0.6 parts by weight of an epoxy based crosslinking agent (trade name "Tetrad C", manufactured by Mitsubishi Gas Chemical Company, Inc., T/C) to thereby obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer.

Subsequently, the subject coating layer was dried at 70 °C for 5 minutes, thereby obtaining a heat-releasable pressure-sensitive adhesive layer sheet of release liner/heat-releasable pressure-sensitive adhesive layer (thickness: 75 μm).

A gel fraction of the subject heat-releasable pressure-sensitive adhesive layer was 92.8 % by weight.

[Fabrication of pressure-sensitive adhesive layer]

To 100 parts by weight of a copolymer formed from 85 parts by weight of n-butyl acrylate (BA), 15 parts by weight of acrylonitrile (AN) and 1.5 parts by weight of acrylic acid (AA), there was added 2 parts by weight (on a weight basis) of a reaction product of trimethylolpropane and tolylene diisocyanate (trade name "Coronate L", manufactured by Nippon Polyurethane Industry Co., Ltd., C/L) to thereby obtain a composition, the composition was coated on a release treated surface of a release liner (polyester film, one surface of which had been release treated with a silicone based release agent; trade name "MRN38", manufactured by Mitsubishi Chemical Polyester Film Co., Ltd., thickness: 38 μm), thereby forming a coating layer.

Subsequently, the subject coating layer was dried at 120 °C for 3 minutes, thereby obtaining a pressure-sensitive adhesive layer sheet of release liner/pressure-sensitive adhesive layer (thickness: 20 μm).

A gel fraction of the subject pressure-sensitive adhesive layer was 24.4 % by weight.

[Fabrication of pressure-sensitive adhesive sheet]

The pressure-sensitive adhesive layer sheet and the heat-releasable pressure-sensitive adhesive layer sheet were stuck to each other in a form such that the pressure-sensitive adhesive layer and the heat-releasable pressure-sensitive adhesive layer came into contact with each other, thereby fabricating a pressure-sensitive adhesive sheet (total thickness of the pressure-sensitive adhesive layers: 95 μm).

(Comparative Example 3)

With 100 parts by weight of a composition consisting of 90 parts by weight of 2-ethylhexyl acrylate (2EHA) and 10 parts by weight of acrylic acid (AA), there were blended, as photopolymerization initiators, 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.), and the mixture was thoroughly purged with a nitrogen gas and irradiated with an ultraviolet ray, thereby obtaining a partially polymerized composition (monomer syrup) having a conversion of polymerization of about 10 % by weight.

To 100 parts by weight of the foregoing partially polymerized composition, there were added 20 parts by weight of a heat-expandable microcapsule (trade name "EXPANCEL-461 DU40", manufactured by Azko Nobel Surface Chemistry AB); 10 parts by weight of a heat-expandable microcapsule (trade name "Matsumoto Microsphere F-50DFU", manufactured by Matsumoto Yushi-Seiyaku Co., Ltd.); 0.4 parts by weight (on a solids basis) of a reaction product of trimethylolpropane and tolylene diisocyanate (trade name "Coronate L", manufactured by Nippon Polyurethane Industry Co., Ltd., C/L) and 0.3 parts by weight of 1,6-hexanediol diacrylate (HDDA) as internal crosslinking agents; and 0.05 parts by weight of 2,2-dimethoxy-1,2-diphenylethan-1-one (trade name "Irgacure 651", manufactured by Ciba Japan K.K.) and 0.05 parts by weight of 1-hydroxy-cyclohexyl-phenyl ketone (trade name "Irgacure 184", manufactured by Ciba Japan K.K.) as photopolymerization initiators to thereby obtain a composition, and the composition was coated on a release treated surface of a release liner (polyester film, one surface of which had been release treated with a silicone based release agent; trade name "MRF38", manufactured by Mitsubishi Chemical Polyester Film Co., Ltd., thickness: 38 μm), thereby forming a coating layer.
Subsequently, a release liner (polyester film, one surface of which had been release treated with a silicone based release agent; a trade name "MRN38", manufactured by Mitsubishi Chemical Polyester Film Co., Ltd., thickness: 38 μm) was stuck onto the subject coating layer in a form such that the release treated surface came into contact with the coating layer, followed by irradiation with an ultraviolet ray under a condition at an illuminance of 4 $mW/cm^2$ and a quantity of light of 720 $mJ/cm^2$, thereby obtaining a pressure-sensitive adhesive sheet of release liner/heat-releasable pressure-sensitive adhesive layer (thickness: 75 μm)/release liner.
A gel fraction of the subject heat-releasable pressure-sensitive adhesive layer was 90.8 % by weight.

(Evaluation)

With respect to Examples 1 to 4 and Comparative Examples 1 to 2, a 90° peel adhesive force before heat treatment, a 90° peel adhesive force after heat treatment and repelling resistance were measured or evaluated. The obtained results are shown in Table 1. Also, with respect to Example 5 and Comparative Example 3, an L-shaped adhesive force test before heat treatment and an L-shaped adhesive force test after heat treatment were performed. The obtained results are shown in Table 2.

(Initial 90° peel adhesive force (before heat treatment))

The release liner on the pressure-sensitive adhesive layer side of each of the pressure-sensitive adhesive sheets obtained in the Examples and Comparative Examples was peeled off, and a polyethylene terephthalate film having a thickness of 50 μm, which had not been subjected to a release treatment, was stuck onto the pressure-sensitive adhesive layer surface, followed by cutting into a measuring width of 25 mm, thereby obtaining a measuring sample. The release liner attached onto the heat-releasable pressure-sensitive adhesive layer surface was peeled off, and the heat-releasable pressure-sensitive adhesive layer surface was fixed by one-way pressure bonding using a 2-kg roller to a clean adherend, which had been rubbed and washed ten times-reciprocating using a clean waste cloth soaked with isopropyl alcohol. After allowing this to stand at ordinary temperature (about 23 °C) for 30 minutes, a 90° peel adhesive force [N/25 mm] was measured under a condition at a tensile rate of 300 mm/min and a tensile angle of 90° using a tensile tester (apparatus name "TCM-1kNB", manufactured by Minebea Co., Ltd.).
An acrylic plate (trade name "Acrylite", manufactured by Mitsubishi Rayon Co., Ltd.) and SUS (430BA) plate were used as the adherend.

(Evaluation of adhesiveness)

<u>Evaluation criteria</u>

Very good (S): The initial 90° peel adhesive force is 10 [N/25 mm] or more.

Good (A): The initial 90° peel adhesive force is 2 [N/25 mm] or more and less than 10 [N/25 mm].
Bad (B): The initial 90° peel adhesive force is less than 2 [N/25 mm].

Incidentally, when a value of the initial 90° peel adhesive force is less than 2 [N/25 mm], there may be the case where a problem from the standpoint of adhesiveness (for example, a problem of separation, lifting or the like at the time of processing) occurs.

(90° peel adhesive force after heat treatment)

The release liner on the pressure-sensitive adhesive layer side of each of the pressure-sensitive adhesive sheets obtained in the Examples and Comparative Examples was peeled off, and a polyethylene terephthalate film

having a thickness of 50 μm, which had not been subjected to a release treatment, was stuck onto the pressure-sensitive adhesive layer surface, followed by cutting into a measuring width of 25 mm, thereby obtaining a measuring sample. The release liner attached onto the heat-releasable pressure-sensitive adhesive layer surface was peeled off, and the heat-releasable pressure-sensitive adhesive layer surface was fixed by one-way pressure bonding using a 2-kg roller to a clean adherend, which had been rubbed and washed ten times-reciprocating using a clean waste cloth soaked with isopropyl alcohol. After allowing this to stand at ordinary temperature (about 23 °C) for 30 minutes, then allowing it to stand in an atmosphere at 120 °C for 5 minutes and further allowing to stand at ordinary temperature for 10 minutes, a 90° peel adhesive force [N/25 mm] was measured under a condition at a tensile rate of 300 mm/min and a tensile angle of 90° using a tensile tester (apparatus name "TCM-1kNB", manufactured by Minebea Co., Ltd.).
An acrylic plate (trade name "Acrylite", manufactured by Mitsubishi Rayon Co., Ltd.) and SUS (430BA) plate were used as the adherend.

(Evaluation of heat peelability)

Evaluation criteria

Good (A): The 90° peel adhesive force after heat treatment is 2 [N/25 mm] or less, or natural peeling occurs due to heat treatment.
Bad (B): The 90° peel adhesive force after heat treatment exceeds 2 [N/25 mm].
Incidentally, when a value of the 90° peel adhesive force after heat treatment exceeds 2 [N/25 mm], there may be the case where a problem from the standpoint of heat peelability (for example, adhesive deposit or a problem that smooth recovery of processed goods from a tape surface becomes difficult, and furthermore, occurrence of a failure of recovery mistake, etc., or the like) occurs.

(Repelling resistance)

Each of the pressure-sensitive adhesive sheets obtained in the Examples and Comparative Examples was cut into a size of 10 mm in width and 90 mm in length, the release liner on the pressure-sensitive adhesive layer side was peeled off, and an aluminum plate (thickness: 0.5 mm) having the same size was stuck onto the pressure-sensitive adhesive layer surface, thereby fabricating a specimen. This specimen was curved so as to have a curvature of R50 in a longitudinal direction while positioning the heat-releasable pressure-sensitive adhesive layer side outside and the aluminum plate side inside, respectively. Subsequently, the release liner on the heat-releasable pressure-sensitive adhesive layer side was peeled off, the heat-releasable pressure-sensitive adhesive layer surface was fixed by pressure bonding using a laminator to a clean acrylic plate (trade name "Acrylite", manufactured by Mitsubishi Rayon Co., Ltd.), which had been rubbed and washed ten times-reciprocating using a clean waste cloth soaked with isopropyl alcohol, such that lifting did not occur. After allowing this to stand at room temperature for one hour, a height (lifting height) at which an end of the specimen in the longitudinal direction lifted from the acrylic plate surface was measured and evaluated according to the following evaluation criteria.
The measurement was performed on the both ends of the specimen, and an average value of the lifting height on these both ends was defined as a value of repelling resistance.

Evaluation criteria

Very good (S): The value of repelling resistance (average value of lifting height on the both ends) is less than 1 mm.
Good (A): The value of repelling resistance (average value of lifting height on the both ends) is 1 mm or more and less than 7 mm.
Bad (B): The value of repelling resistance (average value of lifting height on the both ends) is 7 mm or more.
Incidentally, when the foregoing value of repelling resistance is 7 mm or more, the repelling resistance cannot be exhibited in the pressure-sensitive adhesive sheet.
[Table 1]

| | Formulation | Pressure-sensitive adhesive layer | | Heat-releasable pressure-sensitive adhesive layer | | |
|---|---|---|---|---|---|---|
| | | Gel fraction [% by weight] | Crosslinking component | Gel fraction [% by weight] | Crosslinking component | Content of thermal foaming agent [part by weight] |
| Example 1 | 2EHA/NVP/HEAA = 70/26/4 | 78.1 | HDDA, C/L | 92.3 | HDDA, C/L | 30 |
| Example 2 | 2EHA/NVP/HMAA = 70/26/4 | 60.2 | HDDA | 93.5 | HDDA, C/L | 30 |
| Example 3 | 2EHA/NVP/DEAA/ HEAA/HMAA = 71/15/11/1.5/1.5 | 60.2 | HDDA | 90.8 | HDDA, C/L | 30 |
| Example 4 | BA/HEAA/HMAA = 90/5/5 | 50.8 | C/L | 57.5 | C/L | 30 |
| Comparative Example 1 | 2EHA/AA = 90/10 | 80.0 | HDDA, C/L | 90.3 | HDDA, C/L | 30 |
| Comparative Example 2 | BA/AN/AA = 85/15/1.5 | 24.4 | C/L | 92.8 | T/C | 30 |

[Table 1 (Cont'd.)]

| | SUS (430BA) plate | | | | Acrylic plate | | | | Repelling resistance [mm] |
|---|---|---|---|---|---|---|---|---|---|
| | 90° peel adhesive force [N/25 mm] | | Adhesiveness | Heat peelability | 90° peel adhesive force [N/25 mm] | | Adhesiveness | Heat peelability | |
| | At the initial stage | After heat treatment | | | At the initial stage | After heat treatment | | | |
| Example 1 | 10.0 | 1.3 | S | A | 12.4 | Naturally peeled | S | A | 0 (S) |
| Example 2 | 10.4 | Naturally peeled | S | A | 13.3 | Naturally peeled | S | A | 0 (S) |
| Example 3 | 10.4 | Naturally peeled | S | A | 12.5 | Naturally peeled | S | A | 0 (S) |
| Example 4 | 2.5 | 1.8 | A | A | 5.5 | Naturally peeled | A | A | 5 (A) |
| Comparative Example 1 | 7.0 | 12.3 | A | B | 8.5 | Naturally peeled | A | A | 0 (S) |
| Comparative Example 2 | 4.5 | Naturally peeled | A | A | 6.5 | Naturally peeled | A | A | 14.4 (B) |

In Table 1, it is meant by the terms "naturally peeled" that natural peeling occurred by the heat treatment.

(L-Shaped adhesive force test before heat treatment) (see Figs. 1 and 2)

Each of the pressure-sensitive adhesive sheets of Example 5 and Comparative Example 3 was cut out into a size of 10 mm in length x 10 mm in width and used (pressure-sensitive adhesive sheet 13).
As a jig, an L-shaped stainless steel-made jig 11 shown in Fig. 1 [length (height) of the long side of L-shaped section: 70 mm, length of the short side of L-shaped section: 30 mm, width: 30 mm, plate thickness: 1 mm] was used. Incidentally, in the L-shaped stainless steel-made jig 11, the surface onto which the pressure-sensitive adhesive sheet 13 is stuck is made clean upon being rubbed and washed ten times-reciprocating using a clean waste cloth soaked with isopropyl alcohol.
Also, as an adherend 12 onto which the foregoing jig was stuck, an acrylic plate (trade name "Acrylite", manufactured by Mitsubishi Rayon Co., Ltd.) and an SUS (304) plate were used. Incidentally, the adherend 12 is made clean upon being rubbed and washed ten times-reciprocating using a clean waste cloth soaked with isopropyl alcohol.
The pressure-sensitive adhesive sheet 13 was stuck in a central portion of the lower surface (surface of 30 mm x 30 mm) of the foregoing L-shaped stainless steel-made jig 13 under a condition of a single reciprocation with a 5-kg roller, thereby obtaining the L-shaped stainless steel-made jig 11 having the pressure-sensitive adhesive sheet 13 stuck thereonto. Subsequently, the L-shaped stainless steel-made jig 11 having the pressure-sensitive adhesive sheet 13 stuck thereonto was fixed by pressure bonding to the adherend 12 by means of compression bonding under a condition of a single reciprocation with a 5-kg roller by using the other pressure-sensitive adhesive surface of the pressure-sensitive adhesive sheet 13. There was thus obtained a stuck sample 14 shown in Fig. 2 (stuck material of L-shaped stainless steel-made jig 11/pressure-sensitive adhesive sheet 13/adhered 12).
After obtaining the stuck sample 14 and then allowing it to stand at ordinary temperature (about 23 °C) for 30 minutes, the sheet was peeled off from the adherend 12 in a vertical direction (tensile direction in Fig. 2) at a tensile rate of 200 mm/min using a tensile tester (apparatus name "TCM-1kNB", manufactured by Minebea Co., Ltd.), and an obtained chart peak was read and defined as an initial adhesive force of an L-shaped adhesive force test before heat treatment (initial L-shaped adhesive force before heating in Table 2).
Also, after obtaining the stuck sample 14 and then allowing it to stand at ordinary temperature (about 23 °C) for one day, the sheet was peeled off from the adherend 12 in a vertical direction (tensile direction in Fig. 2) at a tensile rate of 200 mm/min using a tensile tester (apparatus name "TCM-1kNB", manufactured by Minebea Co., Ltd.), and an obtained chart peak was read and defined as an adhesive force after lapse of time of an L-shaped adhesive force test before heat treatment (L-shaped adhesive force after lapse of time before heating in Table 2).

(L-Shaped adhesive force test after heat treatment)

A stuck sample 14 shown in Fig. 2 (stuck material of L-shaped stainless steel-made jig 11/pressure-sensitive adhesive sheet 13/adherend 12) was obtained in the same manner as in the L-shaped adhesive force test before heat treatment.
After obtaining the stuck sample 14, then allowing it to stand at ordinary temperature (about 23 °C) for 30 minutes and further subjecting it to a heat treatment at 130 °C for 10 minutes, the sheet was peeled off from the adherend 12 in a vertical direction (tensile direction in Fig. 2) at a tensile rate of 200 mm/min using a tensile tester (apparatus name "TCM-1kNB", manufactured by Minebea Co., Ltd.), and an obtained chart peak was read and defined as an initial adhesive force of an L-shaped adhesive force test after heat treatment (initial L-shaped adhesive force after heating in Table 2).
Also, after obtaining the stuck sample 14, then allowing it to stand at ordinary temperature (about 23 °C) for one day and further subjecting it to a heat treatment at 130 °C for 10 minutes, the sheet was peeled off from the adherend 12 in a vertical direction (tensile direction in Fig. 2) at a tensile rate of 200 mm/min using a tensile tester (apparatus name "TCM-1kNB", manufactured by Minebea Co., Ltd.), and an obtained chart peak was read and defined as an adhesive force after lapse of time of an L-shaped adhesive force test after heat treatment (L-shaped adhesive force after lapse of time after heating in Table 2).
Then, the case where the "initial L-shaped adhesive force after heating" or "L-shaped adhesive force after lapse of time after heating" was 5 [N/25 mm] or less, or the case where the sheet naturally peeled off from the adherend due to the heat treatment, was evaluated as good heat peelability (A); whereas the case where the "initial L-shaped adhesive force after heating" or "L-shaped adhesive force after lapse of time after heating" exceeded 5 [N/25 mm] was evaluated as bad heat peelability (B). Incidentally, these evaluations are shown in the columns of "Initial L-shaped adhesive force after heating" and "L-Shaped adhesive force after lapse of time after heating", respectively in Table 2.
[Table 2]

| | Heat-releasable pressure-sensitive adhesive layer | | SUS (304) plate | | | | Acrylic plate | | | |
|---|---|---|---|---|---|---|---|---|---|---|
| | | | Initial L-Shaped adhesive force [N] | | L-Shaped adhesive force after lapse of time [N] | | Initial L-Shaped adhesive force [N] | | L-Shaped adhesive force after lapse of time [N] | |
| | Thickness [μm] | Gel fraction [% by weight] | Before heating | After heating | Before heating | After heating | Before heating | After heating | Before heating | After heating |
| Example 5 | 75 | 86.9 | 31 | 1 (A) | 54 | 1 (A) | 56 | Naturally peeled (A) | 52 | Naturally peeled (A) |
| Comparative Example 3 | 75 | 90.8 | 51 | 76 (B) | 68 | 40 (B) | 50 | Naturally peeled (A) | 44 | Naturally peeled (A) |

In Example 5, before performing the heat treatment, the adhesive force is high (with adhesion reliability), and after performing the heat treatment, it is also possible to peel the sheet from the adherend (for example, SUS plate or acrylic plate). Also, even after lapse of time after pressure bonding, it is possible to make both adhesion reliability and disassembling properties with heat treatment compatible with each other.

This application is based on a Japanese Patent Application (No. 2009-117364) filed on May 14, 2009, and the contents thereof are incorporated herein by way of reference.

INDUSTRIAL APPLICABILITY

The heat-releasable pressure-sensitive adhesive tape or sheet of the present invention exhibits good adhesiveness to a variety of adherends and further has both characteristics of repelling resistance characteristic and easy peelability, and therefore, it can be suitably used for applications such as a manufacturing and processing process of metal products, a manufacturing and processing process of ceramic products, a manufacturing process of household electrical appliances in which a resin and a metal (for example, "polycarbonate and stainless steel (SUS)", "ABS and aluminum" or the like) are combined, or disassembling after recovery and recycling.

DESCRIPTION OF LETTERS OR NUMERALS

11: L-Shaped stainless steel-made jig
12: Adherend
13: Pressure-sensitive adhesive sheet
14: Stuck sample (L-shaped stainless steel-made jig/pressure-sensitive adhesive sheet/adherend)

## Claims

1. A heat-releasable pressure-sensitive adhesive tape or sheet having a heat-releasable pressure-sensitive adhesive layer containing: as an essential component, an acrylic copolymer formed of a monomer mixture comprising the following monomer (m1) and monomer (m2), with a content of the monomer (m1) being from 40 to 97.5 % by weight and a content of the monomer (m2) being from 0.5 to 20 % by weight, relative to the whole of monomer components; and a thermal foaming agent:

   (m1) an alkyl (meth)acrylate monomer having an alkyl group with a carbon number of from 1 to 12, represented by the following formula (1):

   [Chem. 1] $CH_2=C(R^1)COOR^2$ (1)

   (in the formula (1), $R^1$ represents a hydrogen atom or a methyl group, and $R^2$ represents an alkyl group with a carbon number of from 1 to 12); and
   (m2) an N-hydroxyalkyl (meth)acrylamide monomer having a hydroxyalkyl group with a carbon number of from 1 to 4, represented by the following formula (2):

   [Chem. 2] $CH_2=C(R^3)CONHR^4$ (2)

   (in the formula (2), $R^3$ represents a hydrogen atom or a methyl group, and $R^4$ represents a hydroxyalkyl group with a carbon number of from 1 to 4).

2. The heat-releasable pressure-sensitive adhesive tape or sheet according to claim 1, having the heat-releasable pressure-sensitive adhesive layer on at least one surface of a pressure-sensitive adhesive layer.

3. The heat-releasable pressure-sensitive adhesive tape or sheet according to claim 1 or 2, wherein the content of the monomer (m1) is from 45 to 96 % by weight, and the content of the monomer (m2) is from 1 to 15 % by weight, relative to the whole of monomer components.

4. The heat-releasable pressure-sensitive adhesive tape or sheet according to any one of claims 1 to 3, wherein the content of the monomer (m1) is from 50 to 94 % by weight, and the content of the monomer (m2) is from 2 to 10 %

by weight, relative to the whole of monomer components.

5. The heat-releasable pressure-sensitive adhesive tape or sheet according to any one of claims 1 to 4, wherein the monomer (m2) is at least one member selected from N-(2-hydroxyethyl) acrylamide, N-(2-hydroxyethyl) methacrylamide and N-methylol (meth)acrylamide.

6. A heat-releasable pressure-sensitive adhesive tape or sheet having a heat-releasable pressure-sensitive adhesive layer containing: as an essential component, an acrylic copolymer formed of a monomer mixture comprising the following monomer (m1), monomer (m2) and monomer (m3), with a content of the monomer (m1) being from 40 to 97.5 % by weight, a content of the monomer (m2) being from 0.5 to 20 % by weight, and a content of the monomer (m3) being from 2 to 40 % by weight, relative to the whole of monomer components; and a thermal foaming agent:

(m1) an alkyl (meth)acrylate monomer having an alkyl group with a carbon number of from 1 to 12, represented by the following formula (1):

[Chem. 3] $CH_2=C(R^1)COOR^2$ (1)

(in the formula (1), $R^1$ represents a hydrogen atom or a methyl group, and $R^2$ represents an alkyl group with a carbon number of from 1 to 12);
(m2) an N-hydroxyalkyl (meth)acrylamide monomer having a hydroxyalkyl group with a carbon number of from 1 to 4, represented by the following formula (2):

[Chem. 4] $CH_2=C(R^3)CONHR^4$ (2)

(in the formula (2), $R^3$ represents a hydrogen atom or a methyl group, and $R^4$ represents a hydroxyalkyl group with a carbon number of from 1 to 4); and
(m3) a vinyl monomer having a nitrogen atom in a backbone thereof, provided that (m2) is excluded.

7. The heat-releasable pressure-sensitive adhesive tape or sheet according to claim 6, having the heat-releasable pressure-sensitive adhesive layer on at least one surface of a pressure-sensitive adhesive layer.

8. The heat-releasable pressure-sensitive adhesive tape or sheet according to claim 6 or 7, wherein the content of the monomer (m1) is from 45 to 96 % by weight, the content of the monomer (m2) is from 1 to 15 % by weight, and the content of the monomer (m3) is from 2.5 to 35 % by weight, relative to the whole of monomer components.

9. The heat-releasable pressure-sensitive adhesive tape or sheet according to any one of claims 6 to 8, wherein the content of the monomer (m1) is from 50 to 94 % by weight, the content of the monomer (m2) is from 2 to 10 % by weight, and the content of the monomer (m3) is from 3 to 30 % by weight, relative to the whole of monomer components.

10. The heat-releasable pressure-sensitive adhesive tape or sheet according to any one of claims 6 to 9, wherein the monomer (m2) is at least one member selected from N-(2-hydroxyethyl) acrylamide, N-(2-hydroxyethyl) methacrylamide and N-methylol (meth)acrylamide.

11. The heat-releasable pressure-sensitive adhesive tape or sheet according to any one of claims 6 to 10, wherein the monomer (m3) is at least one monomer selected from an N-vinyl cyclic amide represented by the following formula (3) and a (meth)acrylamide:

[Chem. 5]

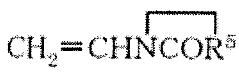

(3)

(in the formula (3), $R^5$ represents a divalent organic group).

12. The heat-releasable pressure-sensitive adhesive tape or sheet according to any one of claims 6 to 11, wherein the monomer (m3) is at least one member selected from N-vinyl-2-pyrrolidone and N-vinyl-2-caprolactam.

**13.** The heat-releasable pressure-sensitive adhesive tape or sheet according to any one of claims 1 to 12, wherein the monomer mixture does not substantially contain a carboxyl group-containing monomer as the monomer components.

Fig. 1

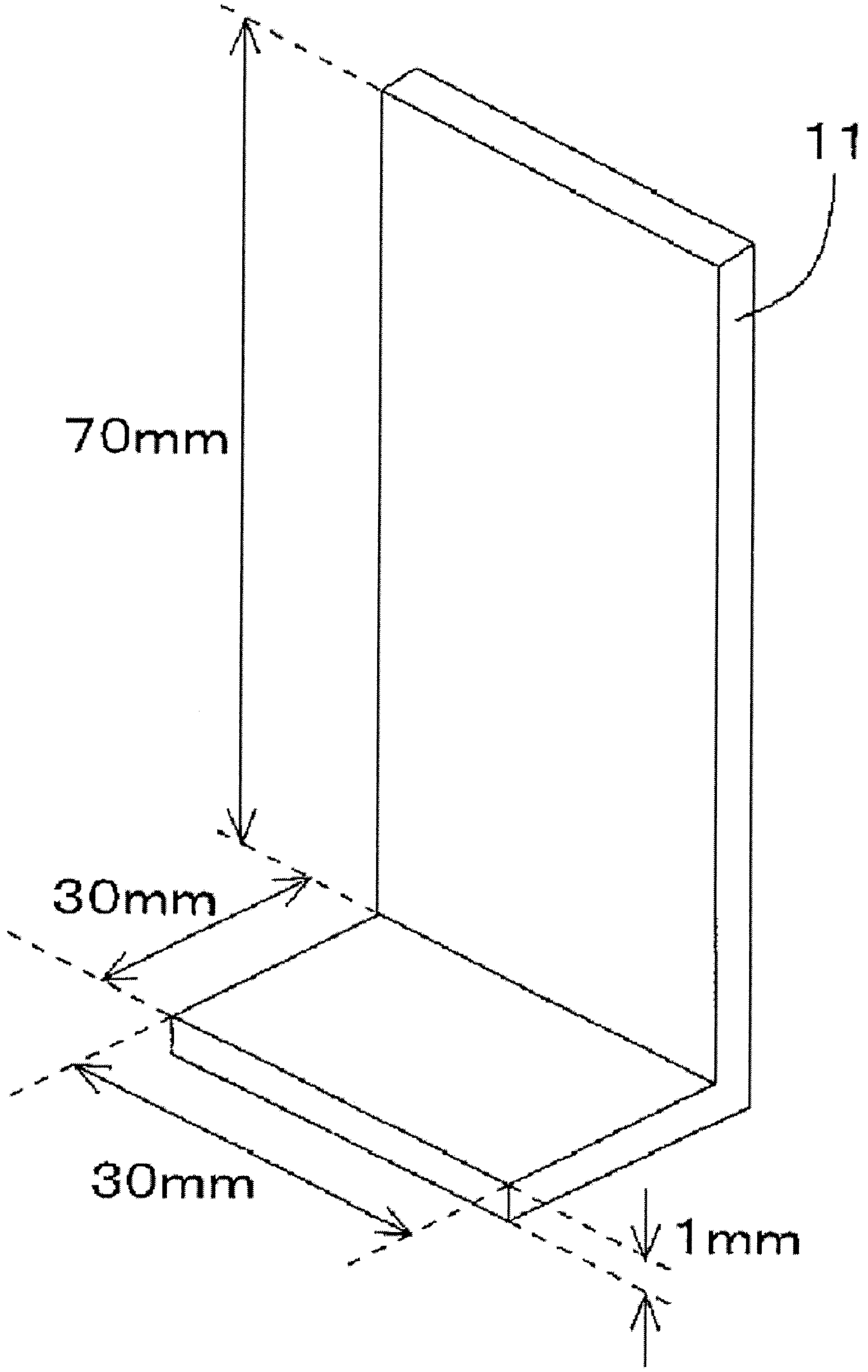

Fig. 2

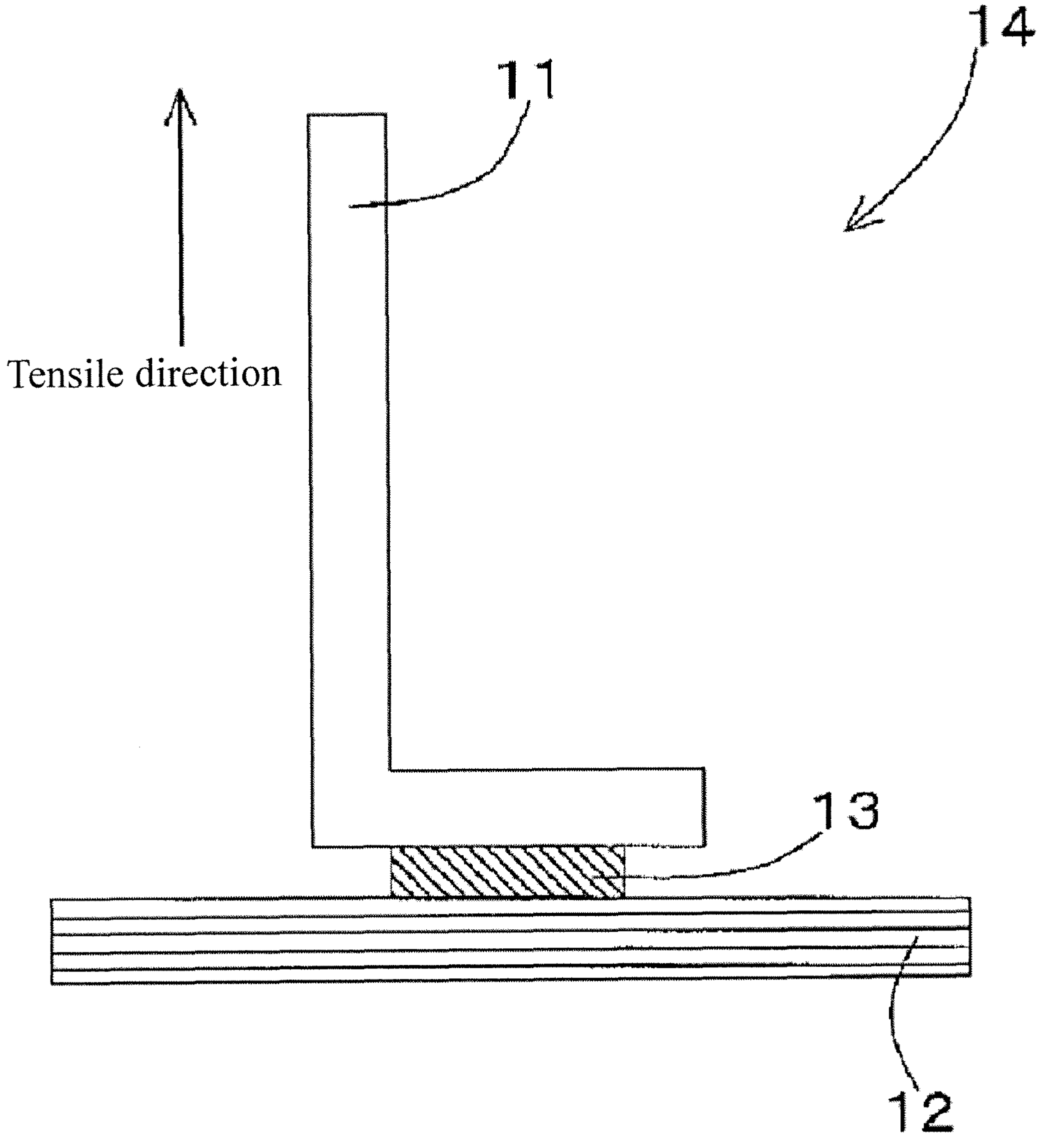

## INTERNATIONAL SEARCH REPORT

International application No.
PCT/JP2010/058136

A. CLASSIFICATION OF SUBJECT MATTER
*C09J133/06*(2006.01)i, *C09J7/00*(2006.01)i, *C09J7/02*(2006.01)i, *C09J11/00*(2006.01)i, *C09J133/26*(2006.01)i

According to International Patent Classification (IPC) or to both national classification and IPC

B. FIELDS SEARCHED

Minimum documentation searched (classification system followed by classification symbols)
C09J133/06, C09J7/00, C09J7/02, C09J11/00, C09J133/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2009/054106 A1 (Nitto Denko Corp.), 30 April 2009 (30.04.2009), claims; paragraph [0195] & JP 2009-120807 A | 1-13 |
| A | WO 2007/111138 A1 (Nitto Denko Corp.), 04 October 2007 (04.10.2007), claims; paragraphs [0025] to [0026] & CN 101395506 A & JP 2007-264092 A & KR 10-2008-0088655 A & US 2009/0104445 A1 | 1-13 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 July, 2010 (21.07.10) | 03 August, 2010 (03.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5043851 A
- JP 6306337 A
- JP 2009117364 A